(19) Europäisches Patentamt
European Patent Office
Office européen des brevets

(11) EP 1 550 690 A1

(12) # EUROPEAN PATENT APPLICATION
published in accordance with Art. 158(3) EPC

(43) Date of publication:
06.07.2005 Bulletin 2005/27

(21) Application number: 03758718.5

(22) Date of filing: 08.10.2003

(51) Int Cl.7: C08J 5/18

(86) International application number:
PCT/JP2003/012899

(87) International publication number:
WO 2004/033541 (22.04.2004 Gazette 2004/17)

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 08.10.2002 JP 2002294392
04.04.2003 JP 2003101477

(71) Applicant: DENKI KAGAKU KOGYO KABUSHIKI KAISHA
Chiyoda-ku, Tokyo 100-8455 (JP)

(72) Inventors:
- SUZUKI, Shigeru c/o Denki Kagaku Kogyo K.K.
Machida-shi, Tokyo 194-8560 (JP)
- ODA, Takeshi c/o Denki Kagaku Kogyo K.K.
Machida-shi, Tokyo 194-8560 (JP)
- SHIMIZU, Norihiro c/o Denki Kagaku Kogyo K.K.
Machida-shi, Tokyo 194-8560 (JP)

(74) Representative: Hartz, Nikolai F., Dr.
Wächtershäuser & Hartz
Patentanwälte
Weinstrasse 8
80333 München (DE)

(54) **HEAT-SCHRINKABLE FILM**

(57) A heat shrinkable film and a heat shrinkable multilayer film excellent in balance of heat resistance, high shrinkability, high shrinkability particularly at a low temperature, resistance to spontaneous shrinkage, chemical resistance and rigidity, are provided.

A heat shrinkable film and a heat shrinkable multilayer film obtained from a resin composition comprising an aromatic vinyl compound/conjugated diene block copolymer having a micro phase separation structure comprising a soft phase and a hard phase and further having a specific structure and a specific dynamic viscoelasticity spectrum and a styrene polymer having a syndyotactic structure, in a specific proportion.



Printed by Jouve, 75001 PARIS (FR)

## Description

TECHNICAL FIELD

The present invention relates to a heat shrinkable film excellent in balance of heat resistance, heat shrinkability, heat shrinkability particularly at a low temperature, resistance to spontaneous shrinkage, transparency, rigidity and chemical resistance, a packaging label and a container packaged therewith.

BACKGROUND ART

Heretofore, as a heat shrinkable film used for shrink packaging or shrink label for containers, a styrene/butadiene type block copolymer films excellent in transparency has been employed in view of good heat shrinkability and finish after shrinkage, and freedom from environmental pollution as in the case of polyvinyl chloride at the time of disposal. However, the film has drawbacks for some applications, such that it has a low heat resistance and a low chemical resistance, it is soft and thereby has little stiffness (rigidity), it has a low heat shrinkage ratio, and its spontaneous shrinkage is significant.
Particularly, in recent years, to provide beverages (such as tea and coffee) in PET bottles in a hot state to consumers, chances are increasing that PET bottles are stored in a heated state for a long term in e.g. vending machines or showcases. For such applications, heat resistance to a temperature of from 60 to 80°C, or to a temperature in the vicinity of 120°C as the case requires, is required for packaging labels, i.e. heat shrinkable films, in addition to the bottles in some cases.
The following have been known as prior arts which paid attention to a styrene polymer having a syndyotactic structure (hereinafter sometimes referred to as a syndyotactic structure styrene polymer or SPS) for the purpose of improving e.g. heat resistance, chemical resistance and scratch resistance.
There are disclosures regarding an oriented film of a polystyrene type polymer having a syndyotactic structure (e.g. JP-A-5-200858), a heat shrinkable label obtained by orienting a polystyrene containing a syndyotactic polystyrene (e.g. JP-A-7-020785) and a heat shrinkable film obtained by orienting a resin composition containing a polystyrene type polymer having a syndyotactic structure (e.g. JP-A-7-032468). Although they have relatively favorable heat resistance, they are heat shrinkable films composed mainly of a styrene polymer having a syndyotactic structure and an atactic polystyrene, and they have insufficient balance of high shrinkability at heat shrinkage, resistance to spontaneous shrinkage, transparency, flexibility, etc., as heat shrinkable films.
There are disclosures regarding a resin composition comprising e.g. a styrene polymer having a syndyotactic structure and a styrene/diene type block copolymer, a film thereof and the like (e.g. JP-A-2002-121355) and a multilayered oriented laminated film comprising e.g. a styrene type polymer composition having a syndyotactic structure (e.g. JP-A-2002-086640). The former publication discloses that specific ranges of the melting point and the crystallization temperature are preferred for example, however, the film has insufficient balance of heat resistance with high shrinkability at the time of heat shrinkage, resistance to spontaneous shrinkage, transparency, rigidity, etc., as a heat shrinkable film. The same applies to the multilayered oriented laminated film disclosed in the latter publication.
There is a disclosure regarding a process for producing a syndyotactic polystyrene type biaxially oriented film (e.g. JP-A-6-087158), however, the conditions to form a specific resin composition containing a styrene polymer having a syndyotactic structure into a heat shrinkable film, are insufficient to impart heat resistance, high shrinkability, resistance to spontaneous shrinkage, transparency, rigidity, etc. in excellent balance.
There is a disclosure regarding an oriented sheet obtained from a resin composition having a composition of a styrene type polymer having a syndyotactic structure and a styrene type polymer having an atactic structure and a production process thereof (e.g. JP-A-10-067868), however, the object of the invention is to obtain an oriented sheet with a low heat shrinkage ratio, and the object and means are different from those of a heat shrinkable film.
Under these circumstances, the present invention relates to a heat shrinkable film excellent in balance of heat resistance, high shrinkability, high shrinkability particularly at a low temperature, resistance to spontaneous shrinkage, chemical resistance and rigidity, particularly excellent in balance of heat resistance and high shrinkability.

DISCLOSURE OF THE INVENTION

The present inventors have conducted extensive studies to achieve the above objects and as a result, found that an oriented film obtained from a resin composition comprising an aromatic vinyl compound/conjugated diene copolymer having a specific structure and a specific dynamic viscoelasticity spectrum and a styrene polymer having a syndyotactic structure in a specific proportion used as a material of a heat shrinkable film, provides a heat shrinkable film excellent in balance of heat resistance, high shrinkability, high shrinkability particularly at a low temperature, resistance to spontaneous shrinkage, chemical resistance and rigidity, and accomplished the present invention.

Namely, the present invention relates to a heat shrinkable film comprising a resin composition comprising the following components (A), (B) and (C), obtained by orientation at least in monoaxial direction, and having a heat shrinkage ratio at 80°C for 10 seconds of at least 20%:

(A) 50 to 95 mass% of a block copolymer comprising an aromatic vinyl compound and a conjugated diene in a proportion of the aromatic vinyl compound of from 50 to 90 mass%, and having a micro phase separation structure comprising a soft phase and a hard phase,
(B) 5 to 50 mass% of a styrene polymer having a syndyotactic structure, and
(C) 0 to 45 mass% of a styrene type polymer different from the components (A) and (B).

BRIEF DESCRIPTION OF THE DRAWING

Fig. 1 is a view conceptually illustrating a test specimen and a cylinder in measurement of heat resistance.

EXPLANATION OF THE REFERENCE NUMERALS

1: Hot plate
2: Cylinder
3: Heat shrinkable film
4: Adhesive tape

BEST MODE FOR CARRYING OUT THE INVENTION

Now, the present invention will be explained in detail below.
First, the component (A) of the present invention will be explained below.
The block copolymer comprising an aromatic vinyl compound/conjugated diene and having a micro phase separation structure comprising a soft phase and a hard phase, used as the component (A) of the present invention, is not particularly limited so long as the proportion of the aromatic vinyl compound is from 50 to 90 mass%, and it has a micro phase separation structure comprising a soft phase and a hard phase, however, measured values obtained by dynamic viscoelasticity measurement preferably satisfy specific conditions.
The block copolymer preferably has a structure in which the aromatic vinyl compound and the conjugated diene are bonded at random, a structure in which the rate of change in their concentration gradient is gradual (so-called tapered structure or the like) or a mixed structure thereof.
Further, it preferably has a structure in which the aromatic vinyl compound and the conjugated diene are bonded at random as part of the hard portion. By introduction of a random structure, the dynamic viscoelasticity characteristics, particularly the temperature of the maximum loss tangent can be lowered, and a heat shrinkable film excellent in shrinkability at a low temperature will be obtained. As the copolymerization proportion of the aromatic vinyl compound and the conjugated diene in the block having a structure in which they are bonded at random, the mass ratio of the aromatic vinyl compound is preferably from 60 to 95 mass%. If the mass ratio of the aromatic vinyl compound is less than 60%, the spontaneous shrinkage ratio tends to be high, and if it exceeds 95 mass%, the heat shrinkage ratio at 80°C tends to be poor.
The block copolymer having a micro phase separation structure comprising a soft phase and a hard phase comprises a hard phase with a high styrene mass ratio and a soft phase with a low styrene mass ratio, and such a micro phase separation structure can be judged by employing a means of image analysis by a transmission electron microscope or by two or more glass transition temperatures obtained by DSC or dynamic viscoelasticity spectrum measurement being observed.
The aromatic vinyl compound used for the component (A) of the present invention may, for example, be styrene, o-methylstyrene, p-methylstyrene, p-tert-butylstyrene, 2,4-dimethylstyrene, 2,5-dimethylstyrene, α-methylstyrene, vinylnaphthalene or vinylanthracene, and it is particularly preferably styrene.
The conjugated diene used for the component (A) of the present invention may, for example, be 1,3-butadiene, 2-methyl-1,3-butadiene (isoprene), 2,3-dimethyl-1,3-butadiene, 1,3-pentadiene or 1,3-hexadiene, and it is particularly preferably 1,3-butadiene or isoprene.
In the block copolymer comprising an aromatic vinyl compound and a conjugated diene and having a micro phase separation structure comprising a soft phase and a hard phase, used as the component (A) of the present

invention, the copolymerization proportion of the aromatic vinyl compound is from 50 to 90 mass%, preferably from 60 to 85 mass%.

If the proportion of the aromatic vinyl compound is less than 50 mass%, heat resistance, rigidity and strength tend to be insufficient, and if it exceeds 90 mass%, the elongation, flexibility, etc. of the film tend to be insufficient.

The molecular weight of the block copolymer comprising an aromatic vinyl compound and a conjugated diene and having a micro phase separation structure comprising a soft phase and a hard phase, as the component (A) of the present invention, is also not particularly limited, however, the number average molecular weight (as calculated as polystyrene) by gel permeation chromatography for example is preferably at least 10,000 and less than 500,000, more preferably at least 30,000 and less than 300,000.

The block copolymer comprising an aromatic vinyl compound and a conjugated diene as the component (A) of the present invention may be a copolymer composition obtained by mixing two or more types of block copolymers having different molecular weight, composition, molecular structure, etc. so long as it satisfies the above definition.

Now, the method for producing the block copolymer comprising an aromatic vinyl compound and a conjugated diene and having a micro phase separation structure comprising a soft phase and a hard phase as the component (A) of the present invention will be explained below.

The copolymer may be produced by living anionic polymerization of one or more each among the above explained aromatic vinyl compounds and conjugated dienes in an organic solvent employing an organic lithium compound as a polymerization initiator.

In the living anionic polymerization, usually the whole of the aromatic vinyl compound and the conjugated diene as material monomers undergo polymerization so long as polymerizable active terminals are present, and these monomers hardly remain.

Further, there are such characteristics in polymerization reaction that no deactivation nor formation of reactive active terminals occurs during polymerization by the chain transfer reaction. Accordingly, it is possible to control the molecular weight and the molecular structure of a copolymer in the present invention by optionally changing the amount, the addition timing and the number of addition of monomers, a polymerization initiator, a randomizing agent and a proton donative substance to be used for deactivation of active terminals (hereinafter referred to as polymerization terminator) in accordance with the purpose of use.

For example, in a case of introducing a block type molecular structure in which the aromatic vinyl compound chain and the conjugated diene chain are separated, so-called clear-cut structure, the aromatic vinyl compound and the conjugated diene are separately charged, and after completion of the reaction of one material, the other material is charged.

Further, in order to obtain a random structure chain, a randomizing agent which makes the difference in ratio of reactivity between the aromatic vinyl compound and the conjugated diene small or the same is selected and added, or the monomers are added little by little so that the monomer supply amount to the reaction system is always lower than the reaction rate, that is, the reaction terminals for polymerization are always lacking.

Further, a copolymer having a tapered chain structure will be obtained by simultaneously adding the aromatic vinyl compound and the conjugated diene to the reaction system in the presence of a proper randomizing agent.

The polymer structure is also not particularly limited, and a linear copolymer or a star copolymer obtained by bonding one terminal of a linear chain by a known coupling agent may also be employed. The known coupling agent may, for example, be a chlorosilane type compound such as silicon tetrachloride or 1,2-bis(methyldichlorosilyl)ethane, an alkoxysilane type compound such as tetramethoxysilane or tetraphenoxysilane, tin tetrachloride, a polyhalogenated hydrocarbon, a carboxylate, a polyvinyl compound, or an epoxydized oil such as epoxydized soybean oil or epoxidized linseed oil, and it is preferably an epoxydized oil, more preferably epoxydized soybean oil.

The organic solvent may, for example, be an aliphatic hydrocarbon such as butane, pentane, hexane, isopentane, heptane, octane or isooctane, an alicyclic hydrocarbon such as cyclopentane, methylcyclopentane, cyclohexane, methylcyclohexane or ethylcyclohexane, or an aromatic hydrocarbon such as ethylbenzene or xylene.

The organic lithium compound as a polymerization initiator is a compound having at least one lithium atom bonded to its molecule, and in the present invention, it may, for example, be a monofunctional polymerization initiator such as ethyl lithium, n-propyl lithium, isopropyl lithium, n-butylithium, sec-butylithium or tert-butylithium, or a polyfunctional polymerization initiator such as hexamethylene dilithium, butadienyl dilithium or isoprenyl dilithium.

Further, the block ratio of the aromatic vinyl compound in the copolymer may be controlled by changing the addition concentration of the randomizing agent which changes the ratio of reactivity between the aromatic vinyl compound and the conjugated diene during the copolymerization. The randomizing agent is a molecule having polarity, and it may, for example, be an amine, an ether, a thioether, phosphoramide or an alkyl benzene sulfonate, or an alkoxide of potassium or sodium.

As a suitable amine, a tertiary amine such as trimethylamine, triethylamine or tetramethylethylenediamine, and in addition, a cyclic tertiary amine may, for example, be used. The ether may, for example, be dimethyl ether, diethyl ether, diphenyl ether, diethylene glycol dimethyl ether, diethylene glycol diethyl ether, diethylene glycol dibutyl

ether or tetrahydrofuran. In addition, triphenylphosphine, hexamethylphosphoramide, potassium alkylbenzene sulfonate or butoxide of e.g. sodium, potassium or sodium may, for example, be mentioned.

In a case of using the randomizing agent, one or plural types may be used, and the addition concentration is suitably from 0.001 to 10 parts by mass in total per 100 parts by mass of the material monomers.

As the polymerization terminator in the living anionic polymerization, in the present invention, at least one member selected from water, an alcohol, an inorganic acid, an organic acid and a phenol compound is added to the reaction system and the polymerization is terminated. As the polymerization terminator, the alcohol may, for example, be methanol, ethanol or butanol, the inorganic acid may, for example, be hydrochloric acid, sulfuric acid, nitric acid, boric acid, phosphoric acid or carbonic acid, and the organic acid may, for example, be a carboxylic acid such as octylic acid, capric acid, lauric acid, myristic acid, palmitic acid, stearic acid, olefinic acid, linoleic acid, linolenic acid, ricinoleic acid or behenic acid, or sulfonic acid or sulfinic acid. Further, water is particularly preferred as the polymerization terminator.

Here, the number of deactivation at the polymerizable active terminals is in proportion to the stoichiometric amount of the polymerization terminator added. Thus, the polymerization terminator may be added in a stoichiometric amount smaller than the number of active terminals dividedly in several times, so that only a part of active terminals during the polymerization are deactivated, and while polymerization is further continued by the remaining active terminals, the remaining active terminals are deactivated when a predetermined rate of polymerization is achieved, or the entire active terminals may be deactivated all at once. However, it is necessary to deactivate all the active terminals by adding an adequate amount of the polymerization initiator relative to the number of active terminals at that point at the completion of the polymerization.

Here, a star copolymer may be prepared by adding the above coupling agent before the deactivating agent is added to carry out a coupling reaction.

A method of separating the copolymer solution from the solvent after completion of the deactivation treatment, may, for example, be (1) a method of precipitating the copolymer in a poor solvent such as methanol, (2) a method of supplying the copolymer solution to e.g. a heating roll and evaporating the solvent alone to separate the copolymer (drum dryer method), (3) a method of continuously or intermittently supplying the heated block copolymer (composition) solution into a can the pressure of which is kept under a pressure lower than the equilibrium vapor pressure of the organic solvent contained therein at the above temperature for devolatilization (flash evaporation method), (4) a method of passing the solution through a vented extruder for devolatilization, (5) a method of blowing the copolymer solution into warm water with stirring to evaporate the solvent (steam stripping method) or a combination thereof.

The dynamic viscoelasticity of the component (A) used in the present invention was measured in such a manner that test pellets were formed into a sheet with a thickness of 0.3 mm by hot pressing, then the sheet was stored in a room adjusted at a temperature of 23°C and a relative humidity of 50%RH for at least 24 hours to carry out curing, and then a distortion and a stress in the direction of pull at a frequency of 1 Hz were added to the test sample, and the dynamic viscoelasticity was measured while raising the temperature at a rate of 4°C/min. The loss tangent of the copolymer preferably used in the present invention preferably has at least one maximum value within a temperature range of at least 65°C and less than 100°C, and the maximum value is preferably within a range of at least 1.5 and less than 4.0. Further, it is preferred that the value of the loss tangent at a temperature lower by 10°C than the temperature for the highest maximum value is at most 40% for the highest maximum value, and that the value of the loss tangent at a temperature lower by 30°C than the temperature for the highest maximum value is at most 10% of the highest maximum value. Further, it is preferred that the loss tangent at 30°C is within a range of at least 0.01 and less than 0.4.

Regarding the dynamic viscoelasticity of the component (A), if the viscoelasticity spectrum is out of the range of the present invention, the high shrinkability, shrinkability at a low temperature and resistance to spontaneous shrinkage (low spontaneous shrinkage ratio at from 0°C to 50°C, for example at 40°C) of the heat shrinkable film may decrease in some cases.

If the temperature for the maximum value of the loss tangent is at most 65°C, the spontaneous shrinkage ratio tends to be high, and if it is at least 100°C, the heat shrinkage ratio at 80°C tends to be low. If the maximum value is out of the range of at least 1.5 and less than 4.0, the orientation conditions have to be selected from narrow ranges.

Further, if the value of the loss tangent at a temperature lower by 10°C than the temperature for the highest maximum value is higher than 40% of the highest maximum value, the heat shrinkage ratio at 80°C tends to be low, and if the value of the loss tangent at a temperature lower by 30°C than the temperature for the highest maximum value is higher than 10% of the highest maximum value, the spontaneous shrinkage ratio tends to be high. Further, if the loss tangent at 30°C is at least 0.4, the spontaneous shrinkage ratio tends to be high.

Now, the styrene type polymer having a syndyotactic structure as the component (B) of the present invention will be explained below.

The syndyotactic structure is such a stereochemical structure that phenyl groups as the side chains are located alternately in opposite directions relative to the main chain formed by the carbon-carbon linkages, and the tacticity is

quantitatively determined by magnetic nuclear resonance (13C-NMR) by isotopic carbon. The tacticity to be measured by 13C-NMR method can be represented by the proportion of continuous plural constituting units, for example, by diad in a case of two, triad in a case of three or pentad in a case of five. The styrene polymer having a syndyotactic structure in the present invention has syndyotacticity of at least 75%, preferably at least 85%, of racemic diad, or at least 30%, preferably at least 50%, of racemic pentad. If the syndyotacticity is out of this range, the styrene polymer will not have sufficient stereoregularity, the crystallization will be insufficient, and the heat shrinkable film will have insufficient heat resistance, rigidity, etc.

The monomer may be styrene, an alkylstyrene, a halogenated styrene, a halogenated alkylstyrene, an alkoxystyrene, or a hydride thereof, and it includes a polymer of such a monomer and a mixture thereof, and a copolymer containing such a monomer as the main component.

Here, the alkylstyrene may, for example, be a styrene substituted by e.g. methyl, ethyl, isopropyl, tertiary butyl or phenyl, vinylnaphthalene or vinylstyrene, and the halogenated styrene may, for example, be chlorostyrene, bromostyrene or fluorostyrene. Further, the halogenated alkylstyrene may, for example, be chloromethylstyrene, and the alkoxystyrene may, for example, be methoxystyrene or ethoxystyrene.

Here, a particularly preferred styrene polymer having a syndyotactic structure may be a homopolymer or a copolymer containing constituting units of styrene, p-methylstyrene, m-methylstyrene, ethylstyrene, divinylbenzene, p-tert-butylstyrene, p-chlorostyrene, m-chlorostyrene, p-fluorostyrene or styrene hydride as a monomer, and satisfying the above conditions.

The styrene polymer having a syndyotactic structure as the component (B) of the present invention is preferably a copolymer of styrene and p-methylstyrene. The copolymerization proportion of p-methylstyrene is from 1 to 70 mol%, preferably from 3 to 50 mol%, more preferably from 5 to 30 mol%. If the copolymerization proportion is less than 1 mol%, the crystalline melting point tends to be high, and the molding temperature is required to be set high, and the other components present in the resin composition are likely to undergo thermal decomposition, gelation or the like. If the copolymerization proportion exceeds 30 mol%, the crystalline characteristics depart from those of the original styrene polymer having a syndyotactic structure, and the heat resistance of the heat shrinkable film may decrease or compatibility with other components in the resin composition may decrease in some cases.

Such a styrene polymer having a syndyotactic structure may be produced, for example, by polymerizing a styrene type monomer (a monomer corresponding to the above styrene type polymer) employing a titanium compound and a condensed product of water and trialkylaluminum as catalysts, in an inactive hydrocarbon solvent or in the absence of a solvent (e.g. JP-A-62-187708). Further, a poly(halogenated alkylstyrene) and a hydrogenated polymer thereof may be obtained by e.g. a known method (JP-A-1-46912, JP-A-1-178505).

Further, as a copolymerizable monomer for the styrene polymer having a syndyotactic structure, in addition to the above various polymers, an olefin monomer such as ethylene, propylene, butene, hexane or octene, a diene monomer such as butadiene or isoprene, a cyclic diene monomer or a polar vinyl monomer such as methyl methacrylate, maleic anhydride or acrylonitrile may, for example, be mentioned. Particularly, one having styrene repeating units of from 30 to 100 mol% and p-methylstyrene repeating units of from 0 to 70 mol% is preferably used, and a styrene polymer having a syndyotactic structure having styrene repeating units of from 70 to 100 mol% and p-methylstyrene repeating units of from 0 to 30 mol% is more preferably used.

The molecular weight of the styrene polymer having a syndyotactic structure of the present invention is not particularly limited, but the weight average molecular weight is preferably from 50,000 to 1,000,000, more preferably from 70,000 to 500,000, particularly preferably from 100,000 to 300,000.

If the weight average molecular weight is less than 50,000, the heat resistance, rigidity, strength, etc. of the heat shrinkable film tend to be insufficient, and if it exceeds 500,000, the melt viscosity tends to be high, and the molding properties tend to decrease. The molecular weight distribution is not particularly limited, but the weight average molecular weight (Mw)/number average molecular weight (Mn) is preferably at least 1.5 and at most 8. If it is out of this range, the molding properties or the orientation properties may decrease in some cases.

The crystalline melting point of the styrene polymer having a syndyotactic structure as the component (B) of the present invention is from 160°C to 260°C, preferably from 200°C to 250°C. If the crystalline melting point is less than 160°C, the heat resistance of the heat shrinkable film tends to be insufficient, and if it exceeds 260°C, the molding temperature is required to be high, and gelation resulting from double bonds, heat deterioration, etc. are likely to occur.

The crystalline melting energy of the styrene polymer having a syndyotactic structure used for the resin composition is at least 1 J/g, preferably at least 5 J/g, more preferably at least 20 J/g. As the upper limit of the crystalline melting energy, a value of 53 J/g is known for example, and in the present invention, it is preferably at most 53 J/g. It depends on the composition, tacticity, etc. If the crystalline melting energy of the styrene type polymer is less than 1 J/g, the heat resistance of the heat shrinkable film will be insufficient.

The component (B) of the present invention is preferably uniformly dispersed and present as a domain in the heat shrinkable film.

Further, it is possible to use various nucleating agents for the purpose of increasing the crystallinity of the

polystyrene having a syndyotactic structure or controlling the crystal size. The nucleating agent may optionally be selected from known agents such as a metal salt of carboxylic acid such as aluminum di(p-t-butylbenzoate), a metal salt of phosphoric acid such as sodium methylenebis(2,4-di-t-butylphenol)acid phosphate, talc and a phthalocyanine derivative. These nucleating agents may be used alone or in combination of at least two.

Now, the component (C) used in the present invention will be explained below. The component (C) is a styrene type polymer different from the components (A) and (B), and it may, for example, be a block copolymer comprising an aromatic vinyl compound and a conjugated diene other than the component (A), a polymer comprising at least one aromatic vinyl compound, a copolymer of at least one aromatic vinyl compound with at least one other vinyl monomer copolymerizable with the aromatic vinyl compound, a hydrogenated polymer of such a polymer or a mixture thereof.

The styrene type compound may, for example, be styrene, $\alpha$-methylstyrene, methylstyrene, ethylstyrene, isopropylstyrene, tert-butylstyrene, phenylstyrene, vinylstyrene, chlorostyrene, bromostyrene, fluorostyrene, chloromethylstyrene, methoxystyrene or ethoxystyrene, and they may be used alone or as a mixture of at least two. Among them, preferred as the aromatic vinyl compound may be styrene, p-methylstyrene, m-methylstyrene, ethylstyrene or p-tert-butylstyrene.

The other copolymerizable vinyl monomer may, for example, be a vinyl compound such as ethylene, propylene, butadiene or isoprene, a vinyl cyanide compound such as acrylonitrile or methacrylonitrile, an alkyl acrylate such as methyl acrylate, ethyl acrylate, propyl acrylate, butyl acrylate, amyl acrylate, hexyl acrylate, octyl acrylate, 2-ethylhexyl acrylate, cyclohexyl acrylate, dodecyl acrylate, octadecyl acrylate, phenyl acrylate or benzyl acrylate, an alkyl methacrylate such as methyl methacrylate, ethyl methacrylate, butyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate or benzyl methacrylate, or a maleimide compound such as maleimide, N-methylmaleimide, N-ethylmaleimide, N-butylmaleimide, N-laurylmaleimide, N-cyclohexylmaleimide, N-phenylmaleimide or N-(p-bromophenyl)maleimide.

Specifically, the component (C) of the present invention may, for example, be a styrene type resin such as a general purpose polystyrene, a rubber-modified polystyrene, an acrylonitrile/styrene copolymer, a methylmethacrylate/styrene copolymer, an $\alpha$-methylstyrene/styrene copolymer, a n-butylacrylate/styrene copolymer, or a styrene/butadiene block copolymer other than the component (A), and it is particularly preferably a general purpose polystyrene, a rubber-modified polystyrene, a random copolymer of styrene and (meth)acrylate, a n-butylacrylate/styrene copolymer, a styrene/styrene butadiene random copolymer/styrene block copolymer or the like in view of compatibility with the component (A) and the component (B).

The component (C) may be one or more styrene type resins selected from the above styrene type resins.

A particularly preferred component (C) will be further explained below.

The general purpose polystyrene has excellent compatibility with a syndyotactic polystyrene as the component (B), and has relatively good compatibility with the block copolymer of an aromatic vinyl compound and a conjugated diene copolymer as the component (A). Accordingly, by using it, the crystallinity of the syndyotactic polystyrene can be controlled, whereby good transparency will be obtained.

A high-impact polystyrene, particularly when added to a layer forming the outermost layer, reinforces the film and further prevents blocking of films. Among high-impact polystyrenes, preferred is one of which rubber particles are dispersed in a saccular form, and of which the volume average particle size is within a range of from 0.1 to 2 $\mu$m. More preferred is one of which the volume average particle size is within a range of from 0.2 to 1.0 $\mu$m. If it is at most 0.1 $\mu$m, the reinforcing effect tends to be poor, and if it exceeds 2 $\mu$m, the transparency tends to deteriorate. The blending amount is preferably from 0.1 to 10 mass%. If it is less than 0.1%, the effect of preventing blocking will not be sufficient, and if it exceeds 10 mass%, the transparency will remarkably decrease.

When a n-butyl acrylate/styrene copolymer is used as the component (C), it is compatibilized with the hard phase of the component (A) and decreases the glass transition temperature of the hard phase, and thereby improves heat shrinkability at a low temperature.

When a styrene block/styrene butadiene random block/styrene block copolymer having no micro phase separation structure comprising a soft phase and a hard phase is used as the component (C), it is compatibilized with the hard phase of the component (A) and decreases the glass transition temperature of the hard phase and thereby improves heat shrinkability at a low temperature.

The aromatic vinyl content is preferably from 60 to 95 mass%, and the styrene chain length at each terminal is preferably at least 0.5 mass% of the total.

It is preferred that the loss tangent obtained in dynamic viscoelasticity has a maximum value within a range of at least 65°C and less than 100°C.

The mass proportion of the components (A)/(B)/(C) constituting the present invention is 50 to 90/5 to 50/0 to 45, preferably 50 to 80/10 to 45/1 to 40, more preferably 50 to 70/10 to 40/1 to 40 (the total is 100).

If the proportion of the component (A) is less than the value of the present invention, the impact resistance and elongation of the film tend to decrease.

If the component (B) exceeds 50 mass% of the range of the present invention, a decrease in heat shrinkage ratio, an excess in spontaneous shrinkage ratio, a decrease in transparency and a decrease in flexibility of the heat shrinkable film tend to occur, and such is unfavorable in view of economical efficiency also. Further, if the component (B) is less than 5 mass% of the range of the present invention, a decrease in heat resistance, a decrease in chemical resistance, a decrease in rigidity and the like of the heat shrinkable film tend to occur.

In the present invention, as the case requires, a thermoplastic resin, a thermoplastic elastomer, a compatibilizing agent, etc. other than the components (A), (B) and (C) may be blended within a range not to impair the object of the present invention. The thermoplastic resin may optionally be selected from known ones such as polyolefin type resins such as linear high density polyethylene, linear low density polyethylene, high-pressure low density polyethylene, isotactic polypropylene, syndyotactic polypropylene, block polypropylene, random polypropylene, polybutene, 1,2-polybutadiene, poly 4-methylpentene, cyclic polyolefin and a copolymer thereof, polyester type resins such as polycarbonate, polyethylene terephthalate and polybutylene terephthalate, polyamide type resins such as polyamide 6 and polyamide 6,6, polyphenylene ether and PPS. Such thermoplastic resins may be used alone or in combination of at least two.

Specifically, the thermoplastic elastomer as a polymer which may be used in the present invention may, for example, be natural rubber, polybutadiene, polyisoprene, polyisobutylene, polychloroprene, polysulfide rubber, thiol rubber, acrylic rubber, urethane rubber, silicone rubber, epichlorohydrin rubber, a styrene type rubber such as a styrene-butadiene block copolymer (SBR), a hydrogenated styrene-butadiene block copolymer (SEB), a styrene-butadiene-styrene block copolymer (SBS), a hydrogenated styrene-butadiene-styrene block copolymer (SEBS), a styrene-isoprene block copolymer (SIR), a hydrogenated styrene-isoprene block copolymer (SEP),a styrene-isoprene-styrene block copolymer (SIS) or a hydrogenated styrene-isoprene-styrene block copolymer (SEPS), an olefin type rubber such as ethylene propylene rubber (EPM), ethylene propylene diene rubber (EPDM) or a linear low deisnty polyethylene type elastomer, a core-shell type particulate elastic body such as butadiene-acrylonitrilestyrene-core-shell rubber (ABS), methyl methacrylate-butadiene-styrene-core-shell rubber (MBS), methyl methacrylate-butyl acrylate-styrene-core-shell rubber (MAS), octyl acrylate-butadiene-styrene-core-shell rubber (MABS), alkyl acrylate-butadiene-acrylonitrile-styrene-core-shell rubber (AABS), butadiene-styrene-core-shell rubber (SBR) or a core-shell rubber containing siloxane such as methyl methacrylate-butyl acrylate-siloxane, or a rubber obtained by modification thereof. They may be used alone or in combination as a mixture of at least two.

With the resin composition of the present invention and the (co)polymers used in the present invention, various additives such as a stabilizer, a lubricant, a processing aid, a crystal nucleating agent, an antiblocking agent, an antistatic agent, an antifogging agent, a weather resistance-improving agent, a plasticizer, a tackifier, a coloring agent, an antistatic agent, mineral oil, a flame retardant and a filler may be blended within a range not to impair the effect of the present invention.

By adding an acrylate type compound as the component (D) represented by the following formula to the heat shrinkable film of the present invention, mechanical characteristics and the thermal stability in view of appearance and color tone of the composition at the time of thermoforming can be improved while keeping the characteristics which the composition comprising the components (A), (B) and (C) originally has. Further, more excellent heat stabilizing effect will be obtained in combination with a phosphorus type antioxidant or a phenol type antioxidant (except the component (D)):

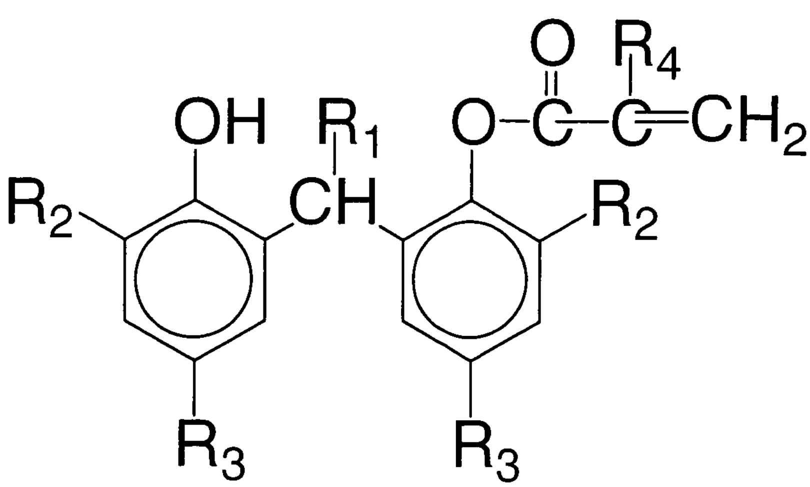

wherein $R_1$ represents hydrogen or a $C_{1-3}$ alkyl, each of $R_2$ and $R_3$ which are independent of each other, represents a $C_{1-9}$ alkyl and $R_4$ represents hydrogen or methyl.

In the above formula representing an acrylate type compound, $R_1$ is hydrogen or a $C_{1-3}$ alkyl, preferably hydrogen or methyl, particularly preferably methyl. $R_2$ is a $C_{1-9}$ alkyl, preferably a $C_{4-8}$ alkyl, particularly preferably an alkyl which is bonded to the benzene ring by quaternary carbon, such as t-butyl, t-pentyl or t-octyl. $R_3$ is a $C_{1-9}$ alkyl, preferably a $C_{1-6}$ alkyl, especially preferably methyl, ethyl, t-butyl or t-pentyl. $R_4$ is hydrogen or methyl, particularly preferably hydrogen.

The following are mentioned as specific examples of a preferred acrylate type compound. 2-[1-(2-hydroxy-3,5-di-tert-pentylphenyl)ethyl]-4,6-di-tert-pentylphenyl acrylate, 2-t-butyl-6-(3-t-butyl-2-hydroxy-5-methylbenzyl)-4-methylphenyl acrylate, 2,4-di-t-butyl-6-[1-(3,5-di-t-butyl-2-hydroxyphenyl)ethyl]phenyl acrylate, 2,4-di-t-amyl-6-[1-(3,5-di-t-amyl-2-hydroxyphenyl)ethyl]phenyl acrylate, 2-t-butyl-6-(3-t-butyl-2-hydroxy-5-methylbenzyl)-4-methylphenyl methacrylate and 2,4-di-t-amyl-6-[1-(3,5-di-t-amyl-2-hydroxyphenyl)ethyl]phenyl methacrylate.

In the present invention, the above-described acrylate type compound is used preferably in an amount of from 0.1 to 3 parts by mass per 100 parts by mass of the total amount of the components (A), (B) and (C). If the blending amount is less than 0.1 part by mass, the effect of improving the thermal stability will be insufficient, and a large number of fish eyes will form when a film is formed, which may cause printing failure at the time of printing, and if it exceeds 3 parts by mass, bleeding tends to occur, which may remarkably decrease the surface characteristics, or no further improvement in the effect by addition will be obtained, such being disadvantageous economically.

Further, in the present invention, it is possible to use a stabilizer other than the above acrylate type compound in combination, and particularly use of a phosphorus type antioxidant or a phenol type antioxidant (except the component (D)) in combination provides a synergistic effect of improving the thermal stability. Such stabilizers are listed below.

The following may be mentioned as examples of the phosphorus type antioxidant.

Distearyl pentaerythritol diphosphite, tris(2,4-dit-butylphenyl) phosphite, bis(2,4-di-t-butylphenyl)pentaerythritol diphosphite, tetrakis(2,4-dit-butylphenyl)4,4'-biphenylene diphosphonite, bis(2,6-dit-butyl-4-methylphenyl)pentaerythritol diphosphite, 2,2'-methylenebis(4,6-di-t-butylphenyl)octyl phosphite, tetratridecyl-4,4'-butylidenebis(3-methyl-6-t-butylphenyl) diphosphite, 2,2'-ethylidenebis(4,6-di-t-butylphenyl) fluorophosphite, bis(2,4,6-tri-t-butylphenyl) pentaerythritol diphosphite and trisnonylphenylphosphite.

The blending amount of the phosphorus type antioxidant is preferably from 0 to 1 part by mass per 100 parts by mass of the total amount of the components (A), (B) and (C). If it exceeds 1 mass%, bleeding may occur, or the surface characteristics may decrease.

The type of the phenol type antioxidant (except the component (D)) is not particularly limited, and the following may be mentioned as specific examples.

n-octadecyl 3-(3,5-di-t-butyl-4-hydroxyphenyl) propionate, pentaerythrityl tetrakis[3-(3,5-di-t-butyl-4-hydroxyphenyl)propionate], triethylene glycol bis[3-(3-t-butyl-4-hydroxy-5-methylphenyl)propionate], 3,9-bis[2-{3-(3-t-butyl-4-hydroxy-5-methylphenyl)propionyloxy}-1,1-dimethylethyl]-2,4,8,10-tetraoxaspiro[5.5]undecane, 1,3,5-trimethyl-2,4,6-tris(3,5-di-t-butyl-4-hydroxybenzyl)benzene, tris(4-t-butyl-3-hydroxy-2,6-dimethylbenzyl)isocyanurate, 2,4-bis(n-octylthio)-6-(3,5-di-t-butyl-4-hydroxyanilino)-1,3,5-triazine, tris(3,5-dit-butyl-4-hydroxybenzyl)isocyanurate, 2,2'-ethylidenebis(2,4-di-t-butylphenol), 2,6-di-t-butyl-4-methylphenol, 2,2'-methylenebis(4-methyl-6-t-butylphenol) and 2,2'-ethylenebis(4-methyl-6-t-butylphenol).

The blending amount of the phenol type antioxidant (except the component (D)) is preferably from 0 to 1 part by mass per 100 parts by mass of the total amount of the components (A), (B) and (C). If it exceeds 1 part by mass, bleeding may occur, or the surface characteristics may decrease.

Further, the lubricant, the processing aid, the antiblocking agent, the antistatic agent and the antifogging agent may, for example, be a saturated fatty acid such as palmitic acid, stearic acid or behenic acid, a fatty acid ester or a pentaerythritol fatty acid ester such as octyl palmitate or octyl stearate, a fatty acid amide such as erucamide, oleamide or stearamide, or an ethylenebis stearamide, a glycerol-mono-fatty acid ester, a glycerol-di-fatty acid ester, a sorbitan fatty acid ester such as sorbitan-mono-palmitate or sorbitan-monostearate, or a higher alcohol such as myristyl alcohol, cetyl alcohol or stearyl alcohol.

Further, the weather resistance-improving agent may, for example, be a benzotriazole type such as 2-(2'-hydroxy-3'-tert-butyl-5'-methylphenyl)-5-chlorobenzotriazole, a salicylate type such as 2,4-di-tert-butylphenyl-3',5'-di-tert-butyl-4'-hydroxybenzoate, a benzophenone type ultraviolet absorber such as 2-hydroxy-4-n-octoxybenzophenone, or a hindered amine type weather resistance-improving agent such as tetrakis(2,2,6,6-tetramethyl-4-piperidyl)-1,2,3,4-butanetetracarboxylate. Further, white oil or silicone oil may, for example, be added.

Such additives are used preferably within a range of at most 5 parts by mass per 100 parts by mass of the resin composition.

The method of mixing the components (A) to (C) and the additives is not particularly limited. They may be subjected to dry blending by e.g. a Henschel mixer, a ribbon blender or a V-blender, or may be melted and pelletized by an extruder. Otherwise, they may be added at any stage of production of the respective polymers, before initiation

of the polymerization, during the polymerization reaction, during the post-treatment of the polymer, etc.

In production of the heat shrinkable film of the present invention, it is preferred that a resin composition solid obtained by preliminary melt kneading and then cooling, is anew subjected to an extrusion and orientation step.

By preliminarily kneading the raw materials in such a manner, the dispersibility of the respective components will be favorable, and the balance of heat resistance, the heat shrinkage ratio, resistance to spontaneous shrinkage, etc. will be favorable.

The heat resistant heat shrinkable film of the present invention is a multilayer film containing at least one layer as e.g. a surface layer or a center layer, a layer comprising (A) from 50 to 95 mass% of a block copolymer comprising an aromatic vinyl compound and a conjugated diene in a proportion of the aromatic vinyl compound of from 50 to 90 mass%, and having a micro phase separation structure comprising a soft phase and a hard phase, (B) from 5 to 50 mass% of a styrene polymer having a syndyotactic structure, (C) from 0 to 45 mass% of a styrene type polymer different from the components (A) and (B), and an additive to be added as the case requires.

In the case of a multilayer film, the resin component to be used for layers other than the layer comprising the components (A), (B) and (C) and the like is not particularly limited, and it may, for example, be an aromatic vinyl compound/conjugated diene block copolymer, an aromatic vinyl compound polymer, a copolymer comprising an aromatic vinyl compound and (meth)acrylic acid, a copolymer comprising an aromatic vinyl compound and (meth)acrylate, or a rubber-modified styrene type polymer, particularly preferably an aromatic vinyl compound/conjugated diene block copolymer or a combination with e.g. a composition composed mainly of it. Needless to say, the multilayer film may be a film comprising a plurality of one or more types of layers comprising the components (A), (B) and (C) and the like, having a different composition, laminated.

The layer structure is not particularly limited, and preferred is a two-layer to seven-layer structure, particularly preferred is a two-layer or three-layer structure. Further, the layer thickness proportion is also not particularly limited, and in the case of a three-layer structure, the proportion is 1 to 30:98 to 40:1 to 30 (the total is 100), preferably 3 to 30:94 to 40:3 to 30 (the total is 100). If the proportion of the thickness of the interlayer exceeds 98, the characteristics of the surface layer are less likely to be obtained, and the characteristics of the interlayer will not sufficiently be obtained.

In the case of a two-layer structure, the layer thickness proportion is 5 to 95:95 to 5 (the total is 100), preferably 20 to 80:80 to 20 (the total is 100). If the thickness proportion is out of this range, the characteristics of the layer of which the thickness proportion is smaller are less likely to be obtained, and the synergistic effect can hardly be expected.

The thickness of the heat shrinkable film of the present invention is not particularly limited, but is preferably from 10 to 300 μm.

The film of the present invention may be produced by various conventional methods. The conventional methods may, for example, be an extrusion method and a calendar method. In a case of producing a multilayer film, a method of carrying out co-extrusion is preferred.

The co-extrusion method is also not particularly limited, and it may be either a feed block method or a multimanifold method. By means of the co-extrusion method, a laminated film excellent in adhesive properties between layers and having higher transparency can be produced without using an adhesive.

Here, as a method other than the above method, films may be individually prepared and laminated by using an adhesive. As a die, a coat hanger die, a T-die or a circular die may, for example, be used.

The film can be efficiently produced by (co)orientating the sheet obtained by melt (co)extrusion. The orientation method may, for example, be a conventional roll orientation method, long gap orientation method, tenter stretching method or tubular orientation method. For example, a monoaxial orientation, simultaneous biaxial orientation, sequential biaxial orientation or a multistage orientation method which is a combination thereof, may be employed. Particularly in the present invention, it is preferred to employ simultaneous or sequential biaxial orientation method.

Particularly preferred as a method for producing an oriented film, is a sequential biaxial orientation method of carrying out roll orientation in the extrusion direction by (co)extrusion using a T-die, followed by tenter stretching.

As the preferred draw ratio, the longitudinal draw ratio is from 1.0 to 2.0 times, and the lateral draw ratio is from 2.0 to 10 times. If the draw ratios are out of these ranges, the heat shrinkage ratio may be insufficient or in excess, or the anisotropy of heat shrinkable may be too high.

Now, conditions when roll orientation is carried out in the extrusion direction by (co)extrusion using a T-die, followed by tenter stretching, as a preferred process in the process for producing the heat shrinkable film of the present invention, will be described below.

The extrusion temperature is preferably a temperature at least the melting point of the styrene polymer having a syndyotactic structure as the component (B). If it is the melting point or lower, the crystalline portion may not be melted, and kneading may not be carried out sufficiently. The cast rolling temperature is preferably set at from 30°C to 100°C, preferably from 40°C to 90°C. If the cast roll temperature is less than 30°C, the melted product is quenched, whereby an irregularity in the film thickness is likely to occur, and if it exceeds 100°C, no sufficient quenching will be carried out, whereby the crystallinity tends to be high prior to the orientation step, and the transparency tends to decrease.

The orientation temperature in the roll orientation and the tenter stretching is from 50 to 100°C, preferably from 60 to 90°C. If the orientation temperature is less than 50°C, the film is likely to break during orientation, and no adequate draw ratio will be achieved, and if it exceeds 100°C, the shrinkage ratio at the time of heat shrinkage may decrease in some cases.

The heat set temperature after completion of the orientation is from 50 to 100°C, preferably from 60 to 90°C and at most the orientation temperature. If the heat set temperature is less than 50°C, no adequate effect of heat set will be obtained, and if it exceeds 100°C, the shrinkage ratio of the heat shrinkable film may decrease in some cases.

Further, in the present invention, a heat shrinkable film obtained by mixing a return material of the heat shrinkable film of the present invention with a virgin material is also a heat shrinkable film excellent in heat shrinkability, resistance to spontaneous shrinkage and rigidity.

The mixture ratio of the return material is not particularly limited, but the return material is mixed preferably within a range of at most 50 mass% with a virgin material in view of heat shrinkability and rigidity.

Further, in the present invention, an antistatic agent or a lubricant may be coated on the surface of the obtained film so as to obtain favorable surface characteristics.

The heat shrinkable film of the present invention may be expanded. The method for producing an expanded film is preferably a method of supplying the composition comprising the components (A), (B) and (C) and the like together with a foaming agent to an extruder, followed by melt extrusion, in view of productivity.

As the forming agent, a heat decomposable a foaming agent or a volatile foaming agent which is conventionally employed for resin processing may be used. The heat decomposable foaming agent may be ammonium carbonate, azodicarbonamide or dinitrosopentamethylenetetramine, and the volatile foaming agent may be a lower alkane such as propane, butane, n-pentane or isopentane, a halogenated hydrocarbon such as dichlorodifluoromethane, tetrafluoroethane, trichlorofluoromethane or methyl chloride, or carbon dioxide or nitrogen. Further, it is also possible to use a foaming aid such as a metal oxide or an air bubble adjuster such as calcium silicate.

Now, characteristics of the heat shrinkable film (including multilayer heat shrinkable film) of the present invention will be described below.

The crystallinity of the styrene polymer having a syndyotactic structure as the component (B) forming the heat shrinkable film of the present invention is from 3 to 80%, preferably from 5 to 60%, more preferably from 10 to 50%. If the crystallinity is less than 3%, heat resistance, strength, chemical resistance, etc. of the heat shrinkable film tend to be insufficient.

The crystallinity of the styrene polymer having a syndyotactic structure forming the heat shrinkable film mainly results from formation of microcrystals due to orientation-induced crystallization in the orientation process.

The cold crystallization temperature of the heat shrinkable film of the present invention derived from the styrene polymer having a syndyotactic structure is preferably from 120 to 170°C, more preferably from 130 to 160°C. If the cold crystallization temperature is less than 120°C, the crystals tend to be too large, and the transparency tends to be impaired, and if it exceeds 170°C, crystallization will not proceed, and the film may be insufficient in heat resistance.

The cold crystallization temperature is the peak top temperature of the exothermic peak in DSC in a temperature-raising step at 10°C/min in DSC measurement of the heat shrinkable film.

Further, the crystalline melting energy of the heat shrinkable film derived from the styrene polymer having a syndyotactic structure is preferably from 0.01 to 20 J/g, more preferably from 0.05 to 15 J/g. If it is less than 0.01 J/g, the heat resistance tends to be insufficient, and if it exceeds 20 J/g, the transparency tends to be low.

The crystalline melting energy means a value calculated by the following formula from values of the area (A1) of the endothermic peak in DSC in a temperature-raising step at 10°C/min in DSC measurement of the heat shrinkable film and the peak area (A2) of the DSC endothermic peak in a temperature-lowering step at 10°C/min measured succeedingly:

$$\text{Crystalline melting energy} = A2\text{-}A1$$

That is, A2 is considered as the experimental crystalline melting energy of the resin composition forming the heat shrinkable film, and A1 is considered as the crystalline melting energy corresponding to a portion which does not crystallize up to the theoretical crystalline melting energy of the heat shrinkable film. Namely, A2-A1 indicates the crystalline melting energy which the heat shrinkable film has.

The heat shrinkage ratio of the heat shrinkable film of the present invention at 90°C for 10 seconds is at lest 30%, preferably at least 35%, more preferably at least 40%. If the heat shrinkage ratio under the above conditions is less than 30%, when the film is attached as a label to a PET bottle for example, the film can not follow the bottle shape and may sag, or it may be wrinkled.

The heat shrinkage ratio at 80°C for 10 seconds is at least 20%, preferably at least 25%, more preferably at

least 30%. If the heat shrinkage ratio under the above conditions is less than 20%, when the film is attached as a label to a PET bottle for example, the film can not follow the bottle shape and may sag, or it may be wrinkled.

The heat shrinkage ratio at 70°C for 10 seconds is at least 10%, preferably at least 15%, more preferably at least 20%. If the heat shrinkage ratio under the above conditions is less than 10%, when the film is attached as a label to a PET bottle in the production line of beverages in PET bottles by e.g. aseptic packaging, the low temperature shrinkability tends to be insufficient, and the film can not follow the bottle shape and may sag, or the film may be wrinkled.

The shrinkage ratio of the heat shrinkable film of the present invention at 40°C for 7 days (the index of spontaneous shrinkage ratio) is at most 5%, preferably at most 4%, more preferably at most 3%. If this shrinkage ratio exceeds 5%, the heat shrinkable film may excessively shrink during its preservation, which may cause distortion in printing or insufficient shrinkage ratio at the time of heat shrinkage.

The total haze of the heat shrinkable film of the present invention is preferably at most 60%, particularly preferably at most 50%, more preferably at most 40%. If the total haze exceeds 60%, transparency of the film tends to be insufficient, and the content is less likely to be seen, or reverse printing tends to be difficult when the film is used as a label. In a case where a significant external haze of the film brings about an increase in the total haze as a whole, it is possible to lower the external haze at the surface thereby to decrease the total haze by employing a multilayer heat shrinkable film included in the present invention.

Further, the internal haze is preferably at most 30%, particularly preferably at most 20%, more preferably at most 10%. If this haze exceeds 30%, transparency of the film tends to be insufficient, and the content is less likely to be seen, or reverse printing tends to be difficult when the film is used as a label. It is possible to use a film with a high haze as a label by carrying out surface printing on it.

When an expanded film is used as a heat shrinkable film, the expanded layer is employed as an inner layer, and an outer layer material as mentioned above may be employed as an outer layer to obtain smoothness on the surface, and such a film may be used as a label by carrying out surface printing on it.

It is preferred that when the heat shrinkable film of the present invention is left at rest on a hot plate of 120°C for 120 seconds so that the film and the hot plate are in contact with each other, no holes of 1 mm or larger are confirmed. If holes are confirmed after the film is left on a hot plate of 120°C, the following problem may arise. Namely, when the film is used as a label for a PET bottle for example and stored in a warm case such as a hot warmer, the temperature of a hot plate portion on which the container with the film is put may temporarily exceed 120°C during storage under heating in some cases. If the container topples in the hot warmer, the heat shrinkable film is brought into contact with the surface of the hot plate, and the defects of the film may increase due to severe temperature and pressure conditions, and the functions of the label such as display and protection may be significantly impaired in some cases.

The ratio of the relaxation stresses in the lateral orientation direction of the film and in the direction at right angles therewith of the heat shrinkable film of the present invention is preferably from 1.2 to 10, more preferably from 1.5 to 8. If this ratio is less than 1.2, the anisotropy of the film tends to be small, and the film may be wrinkled when it is attached to e.g. a bottle, and if it is higher than 10, shrinkage only in one direction tends to be significant when the film is attached to a bottle, and the film may be wrinkled when it is attached to e.g. a bottle also.

As the application of the heat shrinkable film of the present invention, a packaging label such as a heat shrinkable label or a heat shrinkable cap sealing is particularly suitable, and in addition, the film may also be optionally utilized for e.g. a packaging film.

## EXAMPLES

Now, the present invention will be explained in further detail with reference to Examples, however, the present invention is by no means restricted to such specific Examples. In Examples, Φ means the diameter.

### (Materials)

Methods for producing block copolymers (compositions) and the like used for Examples are described below as Reference Examples.

A styrene/styrene butadiene random copolymer/styrene block copolymer having no micro phase separation structure comprising a soft phase and a hard phase, as the component (C), was prepared in Reference Example 1, and a block copolymer comprising an aromatic vinyl compound and a conjugated diene, and having a micro phase separation structure comprising a soft phase and a hard phase, as the component (A), was prepared in Reference Examples 2 to 8.

REFERENCE EXAMPLE 1

(1) 511 kg of cyclohexane as a polymerization solvent and 1.9 kg of a styrene monomer were charged in a reactor and kept at 30°C. In the following Examples and Comparative Examples, cyclohexane was employed as the polymerization solvent.
(2) 960 ml of a 10 mass% cyclohexane solution of n-butylithium as a polymerization catalyst solution was added thereto, and anionic polymerization was carried out. In the following Examples and Comparative Examples, a 10 mass% cyclohexane solution of n-butylithium was employed as the polymerization catalyst solution.
(3) After the rate of polymerization of the styrene monomer exceeded 99%, while keeping the temperature in the reaction system at 80°C, a styrene monomer in a total amount of 162.2 kg and butadiene in a total amount of 23.1 kg were simultaneously added at constant addition rates of 81.5 kg/h and 11.6 kg/h, respectively, and the state was kept as it was for 5 minutes after completion of the addition.
(4) 1.9 kg of a styrene monomer was further added all at once to complete the polymerization.
(5) Finally, all the polymerizable active terminals were deactivated by water to obtain a polymer liquid containing a polymer having a weight average molecular weight (as calculated as polystyrene by means of GPC, the same applies hereinafter) of 230,000 and having a polystyrene block portion and a random structure of styrene and butadiene.

REFERENCE EXAMPLE 2

(1) 490 kg of a polymerization solvent and 8.4 kg of a styrene monomer were charged in a reactor and kept at 30°C.
(2) 2,390 ml of a 10 mass% cyclohexane solution of n-butylithium as a polymerization catalyst solution was added thereto, and the styrene monomer was subjected to anionic polymerization.
(3) After the rate of polymerization of the styrene monomer exceeded 99%, while keeping the temperature in the reaction system at 80°C, a styrene monomer in a total amount of 119.7 kg and butadiene in a total amount of 9.9 kg were simultaneously added at constant addition rates of 119.7 kg/h and 9.9 kg/h, respectively, and the state was kept as it was for 5 minutes after completion of the addition.
(4) While keeping the temperature in the reaction system at 80°C, 63.6 kg of butadiene was added all at once and subsequently it was reacted.
(5) 8.4 kg of a styrene monomer was further added all at once to complete the polymerization.
(6) Finally, all the polymerizable active terminals were deactivated by water to obtain a polymer liquid containing a polymer having a weight average molecular weight of 120,000 and having a polystyrene block portion, a polybutadiene block portion and a random structure of styrene and butadiene.

REFERENCE EXAMPLE 3

(1) 490 kg of a polymerization solvent and 8.4 kg of a styrene monomer were charged in a reactor and kept at 30°C.
(2) 2,940 ml of a 10 mass% cyclohexane solution of n-butylithium as a polymerization catalyst solution was added thereto, and the styrene monomer was subjected to anionic polymerization.
(3) After the rate of polymerization of the styrene monomer exceeded 99%, while keeping the temperature in the reaction system at 80°C, a styrene monomer in a total amount of 122.0 kg and butadiene in a total amount of 7.6 kg were simultaneously added at constant addition rates of 122.0 kg/h and 7.6 kg/h, respectively, and the state was kept as it was for 5 minutes after completion of the addition.
(4) While keeping the temperature in the reaction system at 80°C, 63.6 kg of butadiene was added all at once and subsequently it was reacted.
(5) 8.4 kg of a styrene monomer was further added all at once to complete the polymerization.
(6) Finally, all the polymerizable active terminals were deactivated by water to obtain a polymer liquid containing a polymer having a weight average molecular weight of 110,000 and having a polystyrene block portion, a polybutadiene block portion and a random structure of styrene and butadiene.

REFERENCE EXAMPLE 4

(1) 490 kg of a polymerization solvent and 8.4 kg of a styrene monomer were charged in a reactor and kept at 30°C.
(2) 1,430 ml of a 10 mass% cyclohexane solution of n-butyllithium as a polymerization catalyst solution was added thereto, and the styrene monomer was subjected to anionic polymerization.
(3) After the rate of polymerization of the styrene monomer exceeded 99%, while keeping the temperature in the reaction system at 80°C, a styrene monomer in a total amount of 120.3 kg and butadiene in a total amount of 9.2 kg were simultaneously added at constant addition rates of 96.7 kg/h and 7.4 kg/h, respectively, and the state was kept as it was for 5 minutes after completion of the addition.
(4) While keeping the temperature in the reaction system at 80°C, 19.5 kg of butadiene was added all at once and subsequently it was reacted.
(5) 52.5 kg of a styrene monomer was further added all at once to complete the polymerization.
(6) Finally, all the polymerizable active terminals were deactivated by water to obtain a polymer liquid containing a polymer having a weight average molecular weight of 170,000 and having a polystyrene block portion, a polybutadiene block portion and a random structure of styrene and butadiene.

REFERENCE EXAMPLE 5

(1) 500 kg of a polymerization solvent and 80 kg of a styrene monomer were charged in a reactor and kept at 30°C.
(2) 1,200 ml of a 10 mass% cyclohexane solution of n-butyllithium as a polymerization catalyst solution was added thereto, and the styrene monomer was subjected to anionic polymerization.
(3) After the rate of polymerization of the styrene monomer exceeded 99%, while keeping the temperature in the reaction system at 80°C, a styrene monomer in a total amount of 38.0 kg and butadiene in a total amount of 13.4 kg were simultaneously added at constant addition rates of 76.0 kg/h and 26.8 kg/h, respectively, and the state was kept as it was for 5 minutes after completion of the addition.
(4) While keeping the temperature in the reaction system at 80°C, 18.6 kg of butadiene was added all at once and subsequently it was reacted.
(5) 5.0 kg of a styrene monomer was further added all at once to complete the polymerization.
(6) Finally, all the polymerizable active terminals were deactivated by water to obtain a polymer liquid containing a polymer having a weight average molecular weight of 200,000 and having a polystyrene block portion, a polybutadiene block portion and a random structure of styrene and butadiene.

REFERENCE EXAMPLE 6

(1) 500 kg of a polymerization solvent and 8.0 kg of a styrene monomer were charged in a reactor and kept at 30°C.
(2) 1,230 ml of a 10 mass% cyclohexane solution of n-butyllithium as a polymerization catalyst solution was added thereto, and the styrene monomer was subjected to anionic polymerization.
(3) After the rate of polymerization of the styrene monomer exceeded 99%, while keeping the temperature in the reaction system at 80°C, a styrene monomer in a total amount of 110.0 kg and butadiene in a total amount of 13.4 kg were simultaneously added at constant addition rates of 87.8 kg/h and 10.7 kg/h, respectively, and the state was kept as it was for 5 minutes after completion of the addition.
(4) While keeping the temperature in the reaction system at 80°C, 18.6 kg of butadiene was added all at once and subsequently it was reacted.
(5) 50.0 kg of a styrene monomer was further added all at once to complete the polymerization.
(6) Finally, all the polymerizable active terminals were deactivated by water to obtain a polymer liquid containing a polymer having a weight average molecular weight of 190,000 and having a polystyrene block portion, a polybutadiene block portion and a random structure of styrene and butadiene.

REFERENCE EXAMPLE 7

(1) 500 kg of a polymerization solvent and 8.0 kg of a styrene monomer were charged in a reactor and kept at 30°C.
(2) 1,720 ml of a 10 mass% cyclohexane solution of n-butylithium as a polymerization catalyst solution was added thereto, and the styrene monomer was subjected to anionic polymerization.
(3) After the rate of polymerization of the styrene monomer exceeded 99%, while keeping the temperature in the reaction system at 80°C, a styrene monomer in a total amount of 114.4 kg and butadiene in a total amount of 14.8 kg were simultaneously added at constant addition rates of 76.5 kg/h and 9.9 kg/h, respectively, and the state was kept as it was for 5 minutes after completion of the addition.
(4) While keeping the temperature in the reaction system at 80°C, 54.8 kg of butadiene was added all at once and subsequently it was reacted.
(5) 8.0 kg of a styrene monomer was further added all at once to complete the polymerization.
(6) Finally, all the polymerizable active terminals were deactivated by water to obtain a polymer liquid containing a polymer having a weight average molecular weight of 160,000 and having a polystyrene block portion, a polybutadiene block portion and a random structure of styrene and butadiene.

REFERENCE EXAMPLE 8

(1) 500 kg of a polymerization solvent and 2.0 kg of a styrene monomer were charged in a reactor and kept at 30°C.
(2) 1,750 ml of a 10 mass% cyclohexane solution of n-butylithium as a polymerization catalyst solution was added thereto, and the styrene monomer was subjected to anionic polymerization.
(3) After the rate of polymerization of the styrene monomer exceeded 99%, while keeping the temperature in the reaction system at 80°C, a styrene monomer in a total amount of 94.0 kg and butadiene in a total amount of 15.0 kg were simultaneously added at constant addition rates of 94.0 kg/h and 15.0 kg/h, respectively, and the state was kept as it was for 5 minutes after completion of the addition.
(4) While keeping the temperature in the reaction system at 80°C, 52.0 kg of butadiene was added all at once and subsequently it was reacted.
(5) 36.0 kg of a styrene monomer was further added all at once to complete the polymerization.
(6) Finally, all the polymerizable active terminals were deactivated by water to obtain a polymer liquid containing a polymer having a weight average molecular weight of 150,000 and having a polystyrene block portion, a polybutadiene block portion and a random structure of styrene and butadiene.

Each of the polymers obtained in Reference Examples 1 to 8 in a solution state, after the polymerization solvent was preliminarily concentrated, was subjected to deaeration treatment by a vent extruder by itself and formed into pellets and subjected to the following tests.

(1) Each of the polymer pellets were subjected to pressing under heating at 260°C to prepare a sheet with a thickness of 0.3 mm.
(2) A test specimen with an appropriate size was cut out from this sheet and stored in a room at 23°C at 50%RH for at least 24 hours to carry out curing, and the storage elastic modulus and the loss elastic modulus characteristic of the polymer as the test specimen were measured while changing the temperature by using the following apparatus, and the loss tangent was calculated. The results are shown in Table 1.

Apparatus: Solid viscoelasticity measuring apparatus RSA 3 manufactured by Rheometrics

Set temperature range: 0 to 130°C
Set temperature-raising rate: 4 °C/min
Measuring frequency: 1 Hz

As the component (A) other than the component (A) of Reference Examples, CLEAREN 730L manufactured by Denki Kagaku Kogyo Kabushiki Kaisha which is a SBS resin was subjected to the following tests as it was.
As styrene polymers having a syndyotactic structure as the component (B), the following which are copolymers of styrene and paramethylstyrene were subjected to the following tests as they were.
XAREC 201AE (copolymer) manufactured by Idemitsu Petrochemical Co., Ltd.

XAREC 145AE (copolymer) manufactured by Idemitsu Petrochemical Co., Ltd.
As a styrene type polymer different from (A) and (B), as the component (C), the following resins were subjected to the following tests.
Atactic polystyrene HRM10 manufactured by TOYO STYRENE CO., LTD.
Rubbner-modified polystyrene E640N manufactured by TOYO STYRENE CO., LTD.
As an acrylate type compound as the component (D), the following was subjected to the following tests.
Sumilizer GS manufactured by Sumitomo Chemical Co., Ltd., 2-[1-(2-hydroxy-3,5-di-t-pentylphenyl)ethyl]-4,6-di-t-pentylphenyl acrylate
As other additives, the following were subjected to the following tests.
Irganox 1076 manufactured by Ciba Specialty Chemicals K.K., octadecyl-3-(3,5-di-t-butyl-4-hydroxyphenyl) propionate
Adekastab 2112RG manufactured by Asahi Denka Co., Ltd., tris(2,4-di-t-butylphenyl)phosphite
An oriented film to measure heat shrinkability, spontaneous shrinkability, crystallinity, crystallization temperature, transparency, etc. of the heat shrinkable film of the present invention was prepared in accordance with the following procedure.

(1) The polymers in each of Examples and Comparative Examples were melt-kneaded at a die temperature of 250°C and pelletized by a 30 mmΦ twin-screw extruder with a formulation as shown in Table 2 or 3. The pellets were extruded by a 25 mmΦ twin-screw extruder (Labo Plastomill equipped with a 25 cm width T-die manufactured by Toyo Seiki Seisaku-Sho, Ltd.) at a die temperature as shown in Table 2 or 3 and cooled at a cast roll temperature as shown in Table 2 or 3 to prepare a non-oriented extruded sheet with a thickness of 0.3 mm, and a 9 cm square sheet specimen was cut out from the sheet along the extrusion direction axis (the direction along the extrusion axis will be referred to as "MD direction", and the direction at right angles with the MD direction will be referred to as "TD direction").
(2) The sheet specimen was oriented in the TD direction with a draw ratio as shown in Table 2 or 3 and in the MD direction with a draw ratio as shown in Table 2 or 3 while heating at a predetermined orientation temperature as shown in Table 2 or 3 by using a twin-screw extruder manufactured by Toyo Seiki Seisaku-Sho, Ltd. to prepare a heat shrinkable film. The heat set temperature was 23°C.

A heat shrinkable multilayer film was prepared in such a manner that pellets in each of Examples and Comparative Examples were melt-laminated in a predetermined layer structure and extruded from a T-die by using a multilayer sheet extruder equipped with a feed block, to obtain a multilayer sheet with a thickness of 0.3 mm, and the multilayer sheet was orientated in the similar procedure as the monolayer oriented film. The compositions used for the outer layer and the inner layer, the proportion of the outer and inner layers, the die temperature, the cast roll temperature, etc. are shown in Table 4. As extruders, a 60 m/mΦ single-screw extruder manufactured by NAKATANI KIKAI K.K. for the inner layer and a 40 m/mΦ single-screw extruder manufactured by NAKATANI KIKAI K.K. for the outer layer were employed.

(Measurement of dynamic viscoelasticity)

The loss tangent of each of the polymers (compositions) of Examples and Comparative Examples was measured by the same method as in Reference Examples.

(DSC measurement)

10 mg of a sample and 10 mg of α-alumina as a reference were respectively accurately weighed on an aluminum pan, and measurement was carried out by using differential scanning calorimeter DSC 6200R manufactured by Seiko Instruments Inc. in such a manner that the initial temperature was 30°C, the temperature was raised to 300°C at a temperature-raising rate of 10°C/min, a temperature of 300°C was kept for 5 minutes and then the temperature was lowered to 30°C at 10°C/min.

(Cold crystallization temperature)

The peak top temperature of the exothermic peak in the DSC temperature-raising measurement was employed as the cold crystallization temperature.

(Crystallization temperature)

The peak top temperature of the endothermic peak in the DSC temperature-lowering measurement was employed as the crystallization temperature.

(Crystallinity)

The area (A1) of the endothermic peak in the DSC temperature-raising measurement and the area (A2) of the endothermic peak in the DSC temperature-lowering measurement were obtained, and the crystallinity was obtained in accordance with the following formula:

$$\text{Crystallinity (\%)} = (A2\text{-}A1)/A2 \times 100$$

(Crystalline melting energy)

The crystalline melting energy of the heat shrinkable film was obtained in accordance with the following formula:

$$\text{Crystalline melting energy (J/g)} = A2\text{-}A1$$

That is, A2 is considered as the theoretical crystalline melting energy of the resin composition forming the heat shrinkable film, and A1 is considered as the crystalline melting energy corresponding to a portion which does not crystallize up to the experimental crystalline melting energy of the heat shrinkable film. Namely, A2-A1 indicates the crystalline melting energy which the heat shrinkable film has.

(Measurement of heat shrinkage ratio)

(1) A test specimen of 20 mm in the MD direction and 120 mm in the TD direction was cut out from an oriented film with a thickness of 60 µm.
(2) Marked lines with a distance of 100.0 mm were put in the TD direction of the test specimen.
(3) The test specimen was immersed in warm water at a predetermined temperature (70°C, 80°C, 90°C) for 10 seconds and taken out, the attached water was wiped, and the distance between the marked lines was measured up to the unit of 0.1 mm by using a caliper, and the measurement result was taken as L1.
(4) The heat shrinkage ratio was calculated in accordance with the following formula. Heat shrinkage ratios of at least 10% at 70°C, at least 20% at 80°C and at least 30% at 90°C were measures for practicability:

$$\text{Heat shrinkage ratio (\%)} = \{(100.0\text{-}L1)/100.0\} \times 100$$

(Measurement of spontaneous shrinkage ratio)

(1) A test specimen of 20 mm in the MD direction and 120 mm in the TD direction was cut out from an oriented film with a thickness of 60 µm.
(2) Marked lines with a distance of 100.0 mm were put in the TD direction of the test specimen.
(3) The test specimen was left at rest in a thermostatic chamber at 40°C for 7 days, and then the distance between the marked lines was measured up to the unit of 0.1 mm by using a caliper, and the measurement result was taken as L2.
(4) The spontaneous shrinkage ratio was calculated in accordance with the following formula. A spontaneous shrinkage ratio of at most 5% was a measure for practicability:

$$\text{Spontaneous shrinkage ratio (\%)} = \{(100.0\text{-}L2)/100.0\} \times 100$$

(Evaluation of heat resistance)

(1) A test specimen of 20 mm in the MD direction and 120 mm in the TD direction was cut out from an oriented film with a thickness of 60 μm.
(2) Both ends of the test specimen were fixed and attached to the surface of a cylinder of Φ50 mm having a weight of 300 g so as not to form any clearance between the film and the cylinder by using an adhesive tape.
(3) As shown in Fig. 1, the cylinder to which the film was attached was left at rest on a stainless steel hot plate the temperature of which was preliminarily adjusted to 120°C so that the film was in contact with the hot plate.
(4) 120 Seconds after the film was in contact with the hot plate, the film together with the cylinder was taken from the hot plate, and the change of the film was evaluated by visual observation.

○: No holes of Φ1 mm or larger
×: Holes of Φ1 mm or larger observed, or the film broken

(Measurement of transparency)

The haze of the oriented film was measured by using the following apparatus in accordance with ASTM D1003.
The total haze (H1) of the film was measured by NDH2000 manufactured by Nippon Dehshoku Industries Co., Ltd. The internal haze was obtained in accordance with the following formula in such a manner that a cell with an optical path length of 1 cm was preliminarily filled with white oil (Crystole J-352 manufactured by Exxon Mobil Corporation) and the haze (H2) was measured, and then the film was put in the cell and the haze (H3) was measured.

$$\text{Internal haze} = H3-H2$$

As Examples 1 to 25 and Comparative Examples 1 to 9, the above tests were carried out and evaluation results are shown in Tables 2 to 7.
As Example 26, 1% of CELLBORN SC-K manufactured by Eiwa Chemical Ind. Co. LTD as a foaming agent was blended with 99 mass% of the resin composition used in Example 7, and the tests were carried out in the same manner as in Example 1. As a result, the expansion ratio was 1.6 times, and the heat shrinkage ratios at 70, 80, 90 and 100°C were 11%, 34%, 55% and 60%, respectively. Further, the spontaneous shrinkage ratio was 2%. Heat resistance was favorable also.
As Example 27, the resin compositions used in Example 21 were employed as inner and outer layers, a 60 m/mΦ single-screw extruder manufactured by Nakatani Kikai K.K. for the inner layer and a 40 m/mΦ single-screw extruder manufactured by Nakatani Kikai K.K. for the outer layer were employed as extruders, melt lamination was carried out by using a feed block at 250°C, a three-layer sheet was extruded from a T-die at 250°C, and longitudinal orientation with a draw ratio of 1.1 times was continuously carried out by rolls of 80°C by cast rolls of 40°C, and further lateral orientation with a draw ratio of 5 times was carried out by a tenter stretching machine manufactured by Kobayashi Kikai K.K. to obtain a 50 μm heat shrinkable multilayer film. The line speed in the tenter stretching machine was 5 m/min, and the temperatures of the preheating furnace, the drafting furnace and the heat set furnace of the tenter stretching machine was 110°C, 90°C and 70°C, respectively.
The proportion of the layers of the heat shrinkable film was 10/80/10, and the heat shrinkage ratios at 70, 80, 90 and 100°C were 13%, 37%, 56% and 63%, respectively. The spontaneous shrinkage ratio was 3%. The total haze of the film was 3%.
As Example 28, resin compositions having 0.5 part by mass of Sumilizer GS manufactured by Sumitomo Chemical Co., Ltd. as the component (D), and further 0.4 part by mass of Adekastab manufactured by Asahi Denka Co., Ltd. and 0.2 part by mass of Irganox 1076 manufactured by Ciba Specialty Chemicals K.K. added to 100 parts by mass of the resin compositions as the inner and outer layer materials used in Example 21, were prepared by using the above extruder and they were respectively employed as the inner layer and the outer layer. A 60 m/mΦ single-screw extruder manufactured by Nakatani Kikai K.K. for the inner layer and a 40 m/mΦ single-screw extruder manufactured by Nakatani Kikai K.K. for the outer layer were employed as extruders, melt lamination was carried out by using a feed block of 250°C, a three layer sheet was extruded from a T-die of 250°C, and longitudinal orientation with a draw ratio of 1.1 times was continuously carried out by rolls of 80°C by cast rolls of 40°C, and further lateral orientation with a draw ratio of 5 times was carried out by a tenter stretching machine manufactured by Kobayashi Kikai K.K. to obtain a 50 μm heat shrinkable multilayer film. The line speed in the tenter stretching machine was 5 m/min, and the temperatures of the preheating furnace, the drafting furnace and the heat set furnace of the tenter stretching machine

were 110°C, 90°C and 70°C, respectively.

The proportion of the layers of the heat shrinkable film was 10/80/10, and the heat shrinkage ratios at 70, 80, 90 and 100°C were 12%, 38%, 57% and 62%, respectively. Further, the spontaneous shrinkage ratio was 2%. The total haze of the film was 3%.

For measurement of fish eyes, five films of 10 cm in width x 50 cm in length were cut out from the oriented film, and the number of fish eyes of 0.5 mm or larger in the cut films were measured by visual observation. The average of the number observed of less than 30 was regarded as "acceptable". The number of the fish eyes of the film of Example 27 was 55, whereas the number of the fish eyes of the film of Example 28 was 7.

## INDUSTRIAL APPLICABILITY

The heat shrinkable film of the present invention is a heat shrinkable film comprising a block copolymer comprising specific aromatic vinyl compound and conjugated diene and a styrene polymer having a syndyotactic structure, and is a heat shrinkable film of which the heat resistance is remarkably improved without impairing conventional heat shrinkability, spontaneous shrinkability and transparency. Accordingly, the present invention is suitable for e.g. a heat shrinkable label, a heat shrinkable cap seal, a protective film for bottles, etc. to be warmed.

The entire disclosures of Japanese Patent Application No. 2002-294392 and Japanese Patent Application No. 2003-101477 including specifications, Claims and Summaries are incorporated herein by reference in their entireties.

TABLE 1

| Block copolymer | Reference Example 1 | Reference Example 2 | Reference Example 3 | Reference Example 4 | Reference Example 5 | Reference Example 6 | Reference Example 7 | Reference Example 8 |
|---|---|---|---|---|---|---|---|---|
| Temperature at which loss tangent is maximum: T (°C) | 73 | 84 | 91 | 93 | 98 | 82 | 73 | 70 |
| Loss tangent at temperature T°C: X | 2.64 | 2.41 | 2.51 | 2.69 | 1.53 | 2.26 | 2.23 | 1.86 |
| Loss tangent at temperature (T-10)°C: Y | 0.52 | 0.59 | 0.64 | 0.61 | 0.38 | 0.51 | 0.31 | 0.61 |
| Loss tangent at temperature (T-30)°C: Z | 0.09 | 0.07 | 0.13 | 0.11 | 0.14 | 0.09 | 0.07 | 0.07 |
| Loss tangent at 30°C: Q | 0.06 | 0.04 | 0.04 | 0.04 | 0.06 | 0.04 | 0.04 | 0.05 |
| Y/X×100 (%) | 19.8 | 24.5 | 25.3 | 22.5 | 24.7 | 22.5 | 13.9 | 32.5 |
| Z/X×100 (%) | 3.5 | 2.9 | 5.3 | 4.0 | 9.2 | 4.0 | 3.0 | 4.0 |
| Micro phase separation structure | Nil | Present | Present | Present | Present | Present | Present | Present |

TABLE 2

| | | Ex. 1 | Ex. 2 | Ex. 3 | Ex. 4 |
|---|---|---|---|---|---|
| Formulation | | | | | |
| Component (A) | Reference Example 2 | 26 | 27 | 25 | |
| | Reference Example 3 | | | | 27 |
| | Reference Example 4 | | | | 53 |
| | Reference Example 5 | | 27 | 25 | |
| | Reference Example 6 | 54 | 26 | 25 | |
| Component (B) | 201AE | 20 | 20 | 25 | 20 |
| Processing conditions | | | | | |
| Die temperature (°C) | | 250 | 250 | 250 | 250 |
| Roll temperature (°C) | | 50 | 50 | 50 | 50 |
| Draw ratio in MD direction (times) | | 5 | 5 | 5 | 5 |
| Draw ratio in TD direction (times) | | 1.1 | 1.1 | 1.1 | 1.1 |
| Orientation temperature (°C) | | 80 | 80 | 80 | 90 |

TABLE 2 (Continued)

| | | Ex. 1 | Ex. 2 | Ex. 3 | Ex. 4 |
|---|---|---|---|---|---|
| Heat resistance | | ○ | ○ | ○ | ○ |
| Measurement of shrinkage ratio | 70°C/10 seconds (%) | 20 | 15 | 14 | 12 |
| | 80°C/10 seconds (%) | 44 | 40 | 30 | 22 |
| | 90°C/10 seconds (%) | 71 | 70 | 55 | 56 |
| | 100°C/10 seconds (%) | 75 | 73 | 61 | 59 |
| | 40°C/7 days (%) | 4 | 3 | 3 | 2 |
| Measurement of transparency | Total haze (%) | 30 | 20 | 21 | 33 |
| | Internal haze (%) | 2 | 2 | 2 | 1 |
| Measurement of dynamic viscoelasticity | Temperature at which loss tangent is maximum: T (°C) | 82 | 88 | 89 | 90 |
| | Loss tangent at temperature T °C: X | 1.93 | 1.63 | 1.92 | 2.20 |
| | Loss tangent at temperature (T-10) °C: Y | 0.57 | 0.63 | 0.69 | 0.62 |
| | Loss tangent at temperature (T-30) °C: Z | 0.11 | 0.15 | 0.15 | 0.11 |
| | Y/X×100 (%) | 29 | 39 | 36 | 28 |
| | Z/X×100 (%) | 5 | 9 | 8 | 5 |
| | Loss tangent at 30°C: Q | 0.04 | 0.03 | 0.04 | 0.03 |
| DSC measurement | Cold crystallization temperature (°C) | 139 | 138 | 138 | 138 |
| | Crystallization temperature (°C) | 212 | 212 | 212 | 212 |
| | Crystallinity (%) | 41% | 47% | 52% | 44% |
| | Crystallization energy (J/g) | 3.9 | 4.3 | 5.3 | 4.1 |

TABLE 3

| | | Ex. 5 | Ex. 6 | Ex. 7 | Ex. 8 | Ex. 9 | Ex. 10 |
|---|---|---|---|---|---|---|---|
| Formulation | | | | | | | |
| Component (A) | Reference Example 7 | 72 | 72 | 64 | 64 | | 64 |
| | Reference Example 8 | | | | | 64 | |
| Component (B) | 142AE | | 10 | | 20 | 20 | |
| | 201AE | 10 | | 20 | | | 20 |
| Component (C) | Reference Example 1 | 18 | 18 | 16 | 16 | 16 | 16 |
| Processing conditions | | | | | | | |
| Die temperature (°C) | | 250 | 260 | 250 | 260 | 260 | 250 |
| Roll temperature (°C) | | 50 | 50 | 50 | 50 | 50 | 50 |
| Draw ratio in MD direction (times) | | 5 | 5 | 5 | 5 | 5 | 5 |
| Draw ratio in TD direction (times) | | 1.1 | 1.1 | 1.1 | 1.1 | 1.1 | 1.1 |
| Orientation temperature (°C) | | 80 | 80 | 80 | 80 | 80 | 70 |

TABLE 3 (Continued)

| | | Ex. 5 | Ex. 6 | Ex. 7 | Ex. 8 | Ex. 9 | Ex. 10 |
|---|---|---|---|---|---|---|---|
| Heat resistance | | ○ | ○ | ○ | ○ | ○ | ○ |
| Measurement of shrinkage ratio | 70°C/10 seconds (%) | 15 | 13 | 12 | 11 | 14 | 20 |
| | 80°C/10 seconds (%) | 50 | 51 | 36 | 39 | 36 | 56 |
| | 90°C/10 seconds (%) | 67 | 65 | 57 | 57 | 48 | 69 |
| | 100°C/10 seconds (%) | 70 | 71 | 60 | 65 | 55 | 72 |
| | 40°C/7 days (%) | 2 | 2 | 2 | 3 | 3 | 5 |
| Measurement of transparency | Total haze (%) | 28 | 36 | 48 | 55 | 58 | 27 |
| | Internal haze (%) | 1 | 2 | 3 | 5 | 8 | 2 |
| Measurement of dynamic viscoelasticity | Temperature at which loss tangent is maximum: T (°C) | 75 | 74 | 76 | 76 | 71 | 76 |
| | Loss tangent at temperature T °C: X | 1.80 | 1.70 | 1.75 | 1.59 | 1.59 | 1.75 |
| | Loss tangent at temperature (T-10)°C: Y | 0.52 | 0.53 | 0.48 | 0.41 | 0.43 | 0.48 |
| | Loss tangent at temperature (T-30)°C: Z | 0.10 | 0.10 | 0.08 | 0.05 | 0.05 | 0.08 |
| | Y/X×100 (%) | 29 | 31 | 28 | 26 | 27 | 28 |
| | Z/X×100 (%) | 5 | 6 | 4 | 3 | 3 | 4 |
| | Loss tangent at 30°C: Q | 0.04 | 0.04 | 0.04 | 0.03 | 0.03 | 0.04 |
| DSC measurement | Cold crystallization temperature (°C) | 148 | 142 | 142 | 140 | 142 | 142 |
| | Crystallization temperature (°C) | 210 | 216 | 211 | 216 | 217 | 211 |
| | Crystallinity (%) | 11% | 11% | 41% | 35% | 13% | 49% |
| | Crystallization energy (J/g) | 2.2 | 2.5 | 4.3 | 3.3 | 3.2 | 4.0 |

TABLE 4

| | | Ex. 11 | Ex. 12 | Ex. 13 | Ex. 14 | Ex. 15 | Ex. 16 | Ex. 17 |
|---|---|---|---|---|---|---|---|---|
| Formulation | | | | | | | | |
| Component (A) | Reference Example 7 | 60 | 60 | 56 | 56 | 56 | 56 | 56 |
| | 730L | | | | | | | 10 |
| Component (B) | 142AE | | | | | | 30 | |
| | 201AE | 25 | 25 | 30 | 20 | 10 | | 20 |
| Component (C) | Reference Example 1 | 15 | 15 | 14 | 14 | 14 | 14 | 14 |
| | HRM10 | | | | 10 | 20 | | |
| Processing conditions | | | | | | | | |
| Die temperature (°C) | | 250 | 250 | 250 | 250 | 250 | 260 | 250 |
| Roll temperature (°C) | | 50 | 50 | 50 | 50 | 50 | 50 | 50 |
| Draw ratio in MD direction (times) | | 5 | 5 | 5 | 5 | 5 | 5 | 5 |
| Draw ratio in TD direction (times) | | 1.1 | 1.1 | 1.1 | 1.1 | 1.1 | 1.1 | 1.1 |
| Orientation temperature (°C) | | 80 | 70 | 80 | 80 | 80 | 80 | 80 |

TABLE 4 (Continued)

| | | Ex. 11 | Ex. 12 | Ex. 13 | Ex. 14 | Ex. 15 | Ex. 16 | Ex. 17 |
|---|---|---|---|---|---|---|---|---|
| Heat resistance | | ○ | ○ | ○ | ○ | ○ | ○ | ○ |
| Measurement of shrinkage ratio | 70°C/10 seconds (%) | 10 | 21 | 11 | 12 | 13 | 11 | 17 |
| | 80°C/10 seconds (%) | 28 | 52 | 22 | 23 | 21 | 24 | 31 |
| | 90°C/10 seconds (%) | 43 | 65 | 32 | 43 | 48 | 38 | 55 |
| | 100°C/10 seconds (%) | 53 | 73 | 50 | 51 | 53 | 53 | 66 |
| | 40°C/7 days (%) | 2 | 5 | 2 | 2 | 3 | 1 | 3 |
| Measurement of transparency | Total haze (%) | 56 | 44 | 54 | 51 | 48 | 57 | 41 |
| | Internal haze (%) | 9 | 3 | 9 | 8 | 7 | 8 | 3 |
| Measurement of dynamic viscoelasticity | Temperature at which loss tangent is maximum: T (°C) | 76 | 76 | 76 | 76 | 76 | 76 | 76 |
| | Loss tangent at temperature T°C: X | 1.62 | 1.62 | 1.52 | 1.55 | 1.53 | 1.56 | 1.61 |
| | Loss tangent at temperature (T-10)°C: Y | 0.39 | 0.39 | 0.27 | 0.29 | 0.25 | 0.31 | 0.28 |
| | Loss tangent at temperature (T-30)°C: Z | 0.07 | 0.07 | 0.05 | 0.06 | 0.05 | 0.07 | 0.06 |
| | Y/X×100 (%) | 24 | 24 | 18 | 19 | 16 | 20 | 17 |
| | Z/X×100 (%) | 4 | 4 | 3 | 4 | 3 | 4 | 4 |
| | Loss tangent at 30°C: Q | 0.04 | 0.04 | 0.03 | 0.04 | 0.04 | 0.04 | 0.04 |
| DSC measurement | Cold crystallization temperature (°C) | 143 | 143 | 140 | 150 | 148 | 137 | 144 |
| | Crystallization temperature (°C) | 211 | 212 | 212 | 209 | 208 | 217 | 211 |
| | Crystallinity (%) | 35% | 40% | 60% | 50% | 12% | 43% | 47% |
| | Crystallization energy (J/g) | 5.2 | 5.4 | 6.7 | 4.6 | 2.7 | 5.5 | 4.3 |

TABLE 5

| | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|
| Formulation | | | | | | | | |
| Component (A) | Reference Example 2 | 33 | 34 | | | | | |
| | Reference Example 3 | | | 34 | | | | |
| | Reference Example 4 | | | 66 | | | | |
| | Reference Example 5 | | 33 | | | | | |
| | Reference Example 6 | 67 | 33 | | | | | |
| | Reference Example 7 | | | | 64 | 56 | | 20 |
| | 730L | | | | | | 100 | |
| Component (B) | 201AE | | | | | | | 80 |
| Component (C) | Reference Example 1 | | | | 16 | 14 | | |
| | HRM10 | | | | 20 | 30 | | |
| Processing conditions | | | | | | | | |
| | Die temperature (°C) | 250 | 250 | 250 | 250 | 250 | 250 | 250 |
| | Roll temperature (°C) | 50 | 50 | 50 | 50 | 50 | 50 | 50 |
| | Draw ratio in MD direction (times) | 5 | 5 | 5 | 5 | 5 | 5 | 2.3 |
| | Draw ratio in TD direction (times) | 1.1 | 1.1 | 1.1 | 1.1 | 1.1 | 1.1 | 1.1 |
| | Orientation temperature (°C) | 80 | 80 | 90 | 80 | 80 | 95 | 100 |

Table 5 (Continued)

| | | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|
| Heat resistance | | × | × | × | × | × | × | ○ |
| Measurement of shrinkage ratio | 70°C/10 seconds (%) | 25 | 19 | 11 | 12 | 10 | 8 | 2 |
| | 80°C/10 seconds (%) | 60 | 57 | 42 | 32 | 30 | 20 | 7 |
| | 90°C/10 seconds (%) | 75 | 74 | 70 | 54 | 43 | 42 | 10 |
| | 100°C/10 seconds (%) | 79 | 78 | 79 | 66 | 54 | 57 | 15 |
| | 40°C/7 days (%) | 3 | 3 | 1 | 2 | 4 | 6 | 0 |
| Measurement of transparency | Total haze (%) | 10 | 12 | 15 | 56 | 51 | 6 | 48 |
| | Internal haze (%) | 2 | 2 | 2 | 8 | 9 | 2 | 7 |
| Measurement of dynamic viscoelasticity | Temperature at which loss tangent is maximum: T (°C) | 82 | 87 | 95 | 76 | 75 | 107 | 1 |
| | Loss tangent at temperature T°C: X | 2.47 | 1.73 | 1.70 | 1.55 | 1.61 | 1.50 | 2.11 |
| | Loss tangent at temperature (T-10)°C: Y | 0.69 | 0.48 | 0.61 | 0.38 | 0.31 | 0.59 | 0.42 |
| | Loss tangent at temperature (T-30)°C: Z | 0.09 | 0.14 | 0.14 | 0.05 | 0.05 | 0.19 | 0.03 |
| | Y/X×100 (%) | 28 | 28 | 36 | 25 | 20 | 39 | 20 |
| | Z/X×100 (%) | 4 | 8 | 8 | 3 | 3 | 13 | 1 |
| | Loss tangent at 30°C: Q | 0.04 | 0.06 | 0.03 | 0.03 | 0.03 | 0.08 | 0.05 |
| DSC measurement | Cold crystallization temperature (°C) | – | – | – | – | – | – | 143 |
| | Crystallization temperature (°C) | – | – | – | – | – | – | 212 |
| | Crystallinity (%) | – | – | – | – | – | – | 84 |
| | Crystallization energy (J/g) | – | – | – | – | – | – | 8.6 |

-: No crystallization peak observed.

TABLE 6

| | | Ex. 18 | Ex. 19 | Ex. 20 | Ex. 21 | Ex. 22 |
|---|---|---|---|---|---|---|
| Center material formulation | Example 3 | 100 | 100 | | | |
| | Example 7 | | | 100 | 100 | 100 |
| Outer layer material formulation | 730L | 99 | 99 | 99 | 99 | 99 |
| | E64N | 1 | 1 | 1 | 1 | 1 |
| Processing conditions | Die temperature (°C) | 250 | 250 | 250 | 250 | 250 |
| | Roll temperature (°C) | 50 | 50 | 50 | 50 | 50 |
| | Draw ratio in MD direction (times) | 5 | 5 | 5 | 5 | 5 |
| | Draw ratio in TD direction (times) | 1.1 | 1.1 | 1.1 | 1.1 | 1.1 |
| | Orientation temperature (°C) | 80 | 80 | 80 | 80 | 70 |
| Proportion of layers | Outer layer/inner layer/outer layer | 10/80/10 | 10/90/0 | 5/90/5 | 10/80/10 | 10/80/10 |

Table 6 (Continued)

| | | Ex. 18 | Ex. 19 | Ex. 20 | Ex. 21 | Ex. 22 |
|---|---|---|---|---|---|---|
| Heat resistance | | ○ | ○ | ○ | ○ | ○ |
| Measurement of shrinkage ratio | 70°C/10 seconds (%) | 8 | 7 | 12 | 10 | 11 |
| | 80°C/10 seconds (%) | 28 | 30 | 38 | 36 | 48 |
| | 90°C/10 seconds (%) | 52 | 55 | 56 | 54 | 59 |
| | 100°C/10 seconds (%) | 55 | 61 | 61 | 59 | 64 |
| | 40°C/7 days (%) | 3 | 5 | 2 | 2 | 5 |
| Measurement of transparency | Total haze (%) | 7 | 12 | 8 | 7 | 9 |
| | Internal haze (%) | 2 | 2 | 4 | 6 | 5 |

TABLE 7

| | | Ex. 23 | Ex. 24 | Ex. 25 | Comp. Ex. 8 | Comp. Ex. 9 |
|---|---|---|---|---|---|---|
| Center material formulation | Example 7 | 100 | | | | |
| | Example 11 | | 100 | | | |
| | Example 17 | | | 100 | | |
| | Comparative Example 4 | | | | 100 | |
| | Comparative Example 5 | | | | | 100 |
| Outer layer material formulation | Example 1 | 99 | | | | |
| | 730L | | 99 | 99 | 99 | 99 |
| | E64N | 1 | 1 | 1 | 1 | 1 |
| Processing conditions | Die temperature (°C) | 250 | 250 | 250 | 250 | 250 |
| | Roll temperature (°C) | 50 | 50 | 50 | 50 | 50 |
| | Draw ratio in MD direction (times) | 5 | 5 | 5 | 5 | 5 |
| | Draw ratio in TD direction (times) | 1.1 | 1.1 | 1.1 | 1.1 | 1.1 |
| | Orientation temperature (°C) | 80 | 80 | 80 | 80 | 80 |
| Proportion of layers | Outer layer/inner layer/outer layer | 10/80/10 | 10/80/10 | 10/80/10 | 10/80/10 | 10/80/10 |

TABLE 7 (Continued)

| | | Ex. 23 | Ex. 24 | Ex. 25 | Comp. Ex. 8 | Comp. Ex. 9 |
|---|---|---|---|---|---|---|
| Heat resistance | | ○ | ○ | ○ | × | × |
| Measurement of shrinkage ratio | 70°C/10 seconds (%) | 15 | 10 | 14 | 8 | 5 |
| | 80°C/10 seconds (%) | 52 | 28 | 31 | 31 | 27 |
| | 90°C/10 seconds (%) | 61 | 43 | 51 | 49 | 40 |
| | 100°C/10 seconds (%) | 67 | 53 | 62 | 63 | 51 |
| | 40°C/7 days (%) | 2 | 2 | 3 | 2 | 3 |
| Measurement of transparency | Total haze (%) | 20 | 13 | 5 | 17 | 15 |
| | Internal haze (%) | 5 | 7 | 2 | 9 | 8 |

## Claims

**1.** A heat shrinkable film comprising a resin composition comprising the following components (A), (B) and (C), obtained by orientation at least in monoaxial direction, and having a heat shrinkage ratio at 80°C for 10 seconds of at least 20%:

(A) 50 to 95 mass% of a block copolymer comprising an aromatic vinyl compound and a conjugated diene in

a proportion of the aromatic vinyl compound of from 50 to 90 mass%, and having a micro phase separation structure comprising a soft phase and a hard phase,
(B) 5 to 50 mass% of a styrene type polymer having a syndyotactic structure, and
(C) 0 to 45 mass% of a styrene type polymer different from the components (A) and (B).

**2.** The heat shrinkable film according to Claim 1, wherein the block copolymer as the component (A) has a random copolymer block portion of the aromatic vinyl compound and the conjugated diene in its structure.

**3.** The heat shrinkable film according to Claim 1 or 2, wherein the component (A) has the following characteristics:

(1) the loss tangent (tanδ) has one or more maximum values within a temperature range of at least 65°C and less than 100°C in the dynamic viscoelasticity spectrum,
(2) the highest value of the maximum values corresponding to (1) is within a range of at least 1.5 and less than 4.0,
(3) the loss tangent at a temperature lower by 10°C than the temperature for the highest maximum value among the maximum values corresponding to (1), is at most 40% of the highest maximum value,
(4) the loss tangent at a temperature lower by 30°C than the temperature for the highest maximum value among the maximum values corresponding to (1), is at most 10% of the highest maximum value, and
(5) the loss tangent at 30°C is within a range of at least 0.01 and less than 0.4.

**4.** The heat shrinkable film according to any one of Claims 1 to 3, wherein the resin composition constituting the heat shrinkable film has the following characteristics:

(1) the loss tangent (tanδ) has one or more maximum values within a temperature range of at least 65°C and less than 100°C in the dynamic viscoelasticity spectrum,
(2) the highest value of the maximum values corresponding to (1) is within a range of at least 1.5 and less than 4.0,
(3) the loss tangent at a temperature lower by 10°C than the temperature for the highest maximum value among the maximum values corresponding to (1), is at most 40% of the highest maximum value,
(4) the loss tangent at a temperature lower by 30°C than the temperature for the highest maximum value among the maximum values corresponding to (1), is at most 10% of the highest maximum value, and
(5) the loss tangent at 30°C is within a range of at least 0.01 and less than 0.4.

**5.** The heat shrinkable film according to any one of Claims 1 to 4, which has a spontaneous shrinkage ratio at 40°C for 7 days of at most 5%.

**6.** The heat shrinkable film according to any one of Claims 1 to 5, which contains a styrene type polymer having a random copolymer block portion of an aromatic vinyl compound and a conjugated diene in its structure as the styrene type polymer as the component (C).

**7.** The heat shrinkable film according to any one of Claims 1 to 6, which contains a rubber-modified polystyrene containing dispersed rubber particles having a volume average particle size of at most 2 µm as the styrene type polymer as the component (C).

**8.** The heat shrinkable film according to any one of Claims 1 to 7, which contains a styrene type polymer having a random copolymer structure of styrene and a meth(acrylate) in its structure as the styrene type polymer as the component (C).

**9.** The heat shrinkable film according to any one of Claims 1 to 8, wherein the styrene type polymer having a syndyotactic structure as the component (B) has a crystalline melting point within a range of from 160°C to 260°C, and a crystalline melting energy of at least 1 J/g.

**10.** The heat shrinkable film according to any one of Claims 1 to 9, which has a crystallinity of from 3 to 80% and a cold crystallization temperature of from 120 to 170°C derived from the component (B).

**11.** The heat shrinkable film according to any one of Claims 1 to 10, which has an internal haze of at most 30%.

**12.** The heat shrinkable film according to any one of Claims 1 to 11, wherein the ratio of the relaxation stresses in the

orientation direction of the film and in a direction at right angles therewith, is from 1.2 to 10.

**13.** The heat shrinkable film according to any one of Claims 1 to 12, wherein no holes of 1 mm or larger are confirmed after the film is left at rest on a hot plate of 120°C for 120 seconds so that the film and the hot plate are in contact with each other.

**14.** The heat shrinkable film according to any one of Claims 1 to 13, wherein the styrene type polymer having a syndyotactic structure as the component (B) forms a domain in the resin composition.

**15.** The heat shrinkable film according to any one of Claims 1 to 14, which contains an acrylate type compound (D) represented by the following formula in an amount of from 0.1 to 3 parts by mass per 100 parts by mass of the total amount of the components (A), (B) and (C):

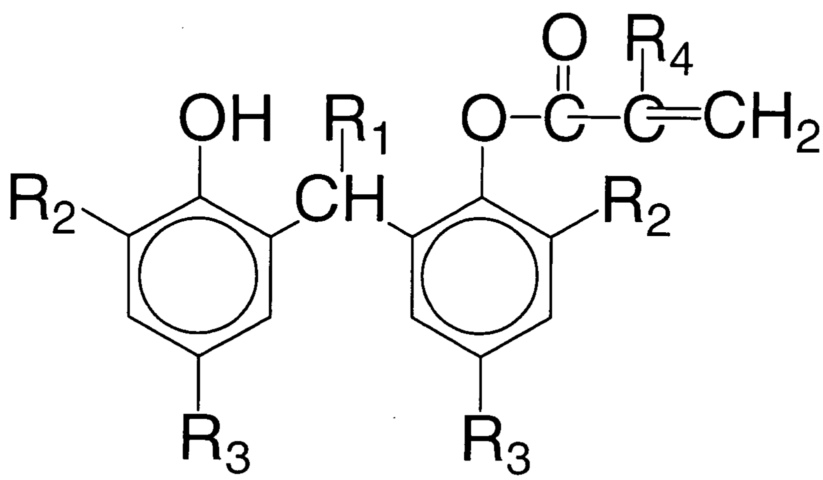

wherein $R_1$ represents hydrogen or a $C_{1-3}$ alkyl, each of $R_2$ and $R_3$ which are independent of each other, represents a $C_{1-9}$ alkyl, and $R_4$ represents hydrogen or methyl.

**16.** The heat shrinkable film according to any one of Claims 1 to 15, which contains a phosphorus type stabilizer in an amount of from 0.1 to 1 part by mass per 100 parts by mass of the total amount of the components (A), (B) and (C).

**17.** The heat shrinkable film according to any one of Claims 1 to 16, which contains a phenol type stabilizer (except the component (D)) in an amount of from 0.1 to 1 part by mass per 100 parts by mass of the total amount of the components (A), (B) and (C).

**18.** The heat shrinkable film according to any one of Claims 1 to 17, which is an expanded product.

**19.** A heat shrinkable film having a multilayer structure, which has at least one layer of the heat shrinkable film as defined in any one of Claims 1 to 18.

**20.** The heat shrinkable film having a multilayer structure according to Claim 19, wherein at least one of the outermost layers is made of a resin composition containing at least one copolymer selected from a styrene/butadiene block copolymer, a styrene/isoprene block copolymer and a styrene/meth(acrylate) type copolymer.

**21.** The heat shrinkable film having a multilayer structure according to Claim 19 or 20, wherein at least one of the outermost layers contains a rubber-modified polystyrene containing dispersed rubber particles having a volume average particle size of at most 2 μm, in an amount of from 0.1 to 10 mass%.

**22.** The heat shrinkable film having a multilayer structure according to any one of Claims 19 to 21, wherein the multilayer structure consists of three layers, the inner layer is the heat shrinkable film as defined in any one of Claims 1 to 18, and the proportion of the thickness of the three layers is 1 to 30:98 to 40:1 to 30 (the total is 100).

**23.** The heat shrinkable film having a multilayer structure according to any one of Claims 19 to 21, wherein the multilayer structure consists of two layers, one layer is the heat shrinkable film as defined in any one of Claims 1 to 18, and the proportion of the thickness of the two layers is 5 to 95:95 to 5 (the total is 100).

**24.** A process for producing the heat shrinkable film as defined in any one of Claims 1 to 23, which comprises an orientation process, wherein the cast roll surface temperature is from 30 to 100°C.

**25.** The process for producing the heat shrinkable film according to Claim 24, wherein in the orientation process, the orientation temperature is within a range of from 50 to 100°C.

**26.** The process for producing the heat shrinkable film according to Claim 25, wherein the heat set temperature after completion of the orientation is within a range of from 50 to 100°C and at most the orientation temperature.

**27.** The process for producing the heat shrinkable film according to Claim 26, wherein the draw ratio is from 1.05 to 2.0 times in the longitudinal direction and from 2.1 to 10 times in the lateral direction in simultaneous or sequential biaxial orientation process.

**28.** A packaging label comprising the heat shrinkable film as defined in any one of Claims 1 to 23.

**29.** A container packaged with the heat shrinkable film as defined in any one of Claims 1 to 23 or the packaging label as defined in Claim 28.

Fig. 1

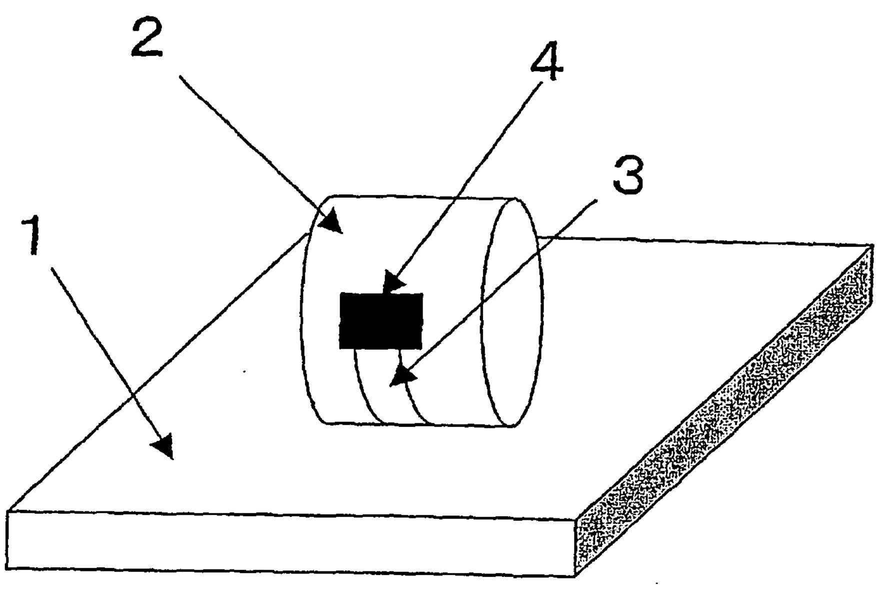

## INTERNATIONAL SEARCH REPORT

International application No.
PCT/JP03/12899

**A. CLASSIFICATION OF SUBJECT MATTER**

Int.Cl[7] C08J5/18, C08L53/02, B29C61/06, B32B27/28 // C08L53:02, B29K96:04, B29K25:00, B29L7:00 (C08L53/02, C08L25:04)

According to International Patent Classification (IPC) or to both national classification and IPC

**B. FIELDS SEARCHED**

Minimum documentation searched (classification system followed by classification symbols)
Int.Cl[7] C08J5/18, C08L53/02, B29C61/06, B32B27/28

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2003 |
| Kokai Jitsuyo Shinan Koho | 1971-2003 | Toroku Jitsuyo Shinan Koho | 1994-2003 |

Electronic data base consulted during the international search (name of data base and, where practicable, search terms used)
CA, REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| Y | WO 02/38642 A1 (Denki Kagaku Kogyo Kabushiki Kaisha), 16 May, 2002 (16.05.02), Claims; page 20, lines 5 to 18; page 23, line 5 to page 24, line 7 & EP 1333043 A1 page 10, Par. No. [0079]; page 11, Par. Nos. [0092] to [0094] & AU 200212751 A & KR 2003051801 A | 1-29 |
| Y | JP 10-058540 A (Asahi Chemical Industry Co., Ltd.), 03 March, 1998 (03.03.98), Claims; page 4, Par. No. [0016]; page 10; Figs. 1, 2 (Family: none) | 1-29 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 December, 2003 (04.12.03) | 24 December, 2003 (24.12.03) |
| Name and mailing address of the ISA/ Japanese Patent Office | Authorized officer |
| Facsimile No. | Telephone No. |

Form PCT/ISA/210 (second sheet) (July 1998)

## INTERNATIONAL SEARCH REPORT

International application No.
PCT/JP03/12899

C (Continuation). DOCUMENTS CONSIDERED TO BE RELEVANT

| Category* | Citation of document, with indication, where appropriate, of the relevant passages | Relevant to claim No. |
|---|---|---|
| Y | JP 07-032468 A (Toyobo Co., Ltd.),<br>03 February, 1995 (03.02.95),<br>Claims; pages 2 to 3; Par. Nos. [0008] to [0010]<br>(Family: none) | 1-29 |
| Y | JP 07-020785 A (Toyobo Co., Ltd.),<br>24 January, 1995 (24.01.95),<br>Claims<br>(Family: none) | 1-29 |
| Y | JP 09-286884 A (Asahi Chemical Industry Co., Ltd.),<br>04 November, 1997 (04.11.97),<br>Claims; page 6, Par. No. [0038]<br>(Family: none) | 1-29 |
| Y | JP 06-023820 A (Sumitomo Chemical Co., Ltd.),<br>01 February, 1994 (01.02.94),<br>Claims; page 3, Par. No. [0014]<br>(Family: none) | 1-29 |
| A | JP 11-349704 A (Mitsubishi Plastics, Inc.),<br>21 December, 1999 (21.12.99),<br>Claims; page 4, Par. Nos. [0018] to [0021]<br>(Family: none) | 1-29 |
| A | JP 10-176069 A (Asahi Chemical Industry Co., Ltd.),<br>30 June, 1998 (30.06.98),<br>Claims; page 3, Par. No. [0009]<br>(Family: none) | 1-29 |

Form PCT/ISA/210 (continuation of second sheet) (July 1998)